(19) **Europäisches Patentamt / European Patent Office / Office européen des brevets**

(11) **EP 4 745 878 A1**

(12) **EUROPEAN PATENT APPLICATION**
published in accordance with Art. 153(4) EPC

(43) Date of publication:
**20.05.2026 Bulletin 2026/21**

(21) Application number: **24867183.6**

(22) Date of filing: **15.08.2024**

(51) International Patent Classification (IPC):
*G06T 7/00* (2017.01)    *G06V 10/44* (2022.01)
*G06V 10/74* (2022.01)    *G06N 3/045* (2023.01)
*G06N 3/0464* (2023.01)

(52) Cooperative Patent Classification (CPC):
**G06N 3/045; G06N 3/0464; G06N 3/096;**
**G06T 7/00; G06V 10/44; G06V 10/74**

(86) International application number:
**PCT/CN2024/112262**

(87) International publication number:
**WO 2025/060766 (27.03.2025 Gazette 2025/13)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **22.09.2023 CN 202311239167**

(71) Applicant: **Tencent Technology (Shenzhen) Company Limited**
**Shenzhen, Guangdong 518057 (CN)**

(72) Inventor: **PENG, Jinlong**
**Shenzhen, Guangdong 518057 (CN)**

(74) Representative: **Reddie & Grose LLP**
**The White Chapel Building**
**10 Whitechapel High Street**
**London E1 8QS (GB)**

(54) **IMAGE RECOGNITION METHOD AND APPARATUS, STORAGE MEDIUM AND ELECTRONIC DEVICE**

(57) Disclosed in the present application are an image recognition method and apparatus, a storage medium and an electronic device, which can be applied to various scenarios such as cloud technology, artificial intelligence, smart transportation and driver assistance. The method comprises: using an anomaly part recognition network having a siamese network structure to extract image features of an image to be analyzed, the image features comprising a first image feature extracted by a first feature extraction network in the siamese network structure from said image, and a second image feature extracted by a second feature extraction network in the siamese network structure from said image, the first feature extraction network being trained by means of positive sample images, and the second feature extraction network being trained by means of negative sample images with the first feature extraction network as a reference network; acquiring the feature similarity between the first image feature and the second image feature; and, on the basis of the feature similarity, determining a recognition result of said image. The present application solves the technical problem of relatively low accuracy of recognition results of existing image recognition modes for industrial parts.

```
Obtain a first image of a first object, where the first object is an     S202
object that is to be detected

Extract an image feature of the first image through a defect recognizing network,
where the defect recognizing network comprises a siamese neural network, the
image feature comprises a first image feature, which is extracted from the first
image through a first feature extraction network in the siamese neural network, and
a second image feature, which is extracted from the first image through a second
feature extraction network in the siamese neural network, the first feature extraction   S204
network is a network trained using a positive sample image in a pair of sample
images, the second feature extraction network is a network trained using the first
feature extraction network as a reference network and using a negative sample
image in the pair of sample images, the positive sample image is an image of the
object which does not have the defect, the negative sample image is an image of the
object which has the defect, and the negative sample image is synthesized from the
positive sample image

Obtain a similarity between the first image feature and the second     S206
image feature

Determine a recognition result of the first image according to the
similarity, where the recognition result indicates whether the first     S208
object in the first image has the defect
```

FIG. 2

**Description**

This application claims priority to Chinese Patent Application No. 202311239167.9, filed with the China National Intellectual Property Administration on September 22, 2023, and entitled "METHOD AND APPARATUS FOR IMAGE RECOGNITION, STORAGE MEDIUM, AND ELECTRONIC DEVICE".

FIELD OF THE TECHNOLOGY

The present disclosure relates to the computer field, and specifically, to image recognition techniques.

BACKGROUND OF THE DISCLOSURE

Generally, in many industrial scenarios, many industrial parts need to be utilized to produce and/or assemble a product. A lot of defective industrial parts (which may be called No Good parts or NG parts) are inevitable in mass production, because these parts are quite small. Hence, whether the industrial parts are subject to defects are usually detected before the parts are utilized.

In related art, a common method for detecting defects in the industrial part is as follows. An image of a to-be-detected part and an image of a normal part (which may be called an OK part). Then, features of the two parts are compared using the images. In a case that similarity between the features of the two images is high, the to-be-detected part is determined to be an OK part. In a case that the similarity is low, the to-be-detected part is determined to be an NG part.

When the defect on the to-be-detected part is small and/or slight, a difference between the feature of the to-be-detected part and the feature of the OK product may be trivial, which results in the NG parts escaping the detection. In other words, the above method for detecting the defects in the industrial part is subject to low recognition accuracy.

At present, no effective solution has been provided to address the above issue.

SUMMARY

Embodiments of the present disclosure provide a method and an apparatus for image recognition, a storage medium, and an electronic device. Addressed is at least a technical issue of inaccurate result of recognizing an industrial part in an image in related art.

In an aspect, a method for image recognition is provided according to embodiments of the present disclosure. The method is applicable to an electronic device and comprises: obtaining a first image of a first object; extracting an image feature of the first image through a defect recognizing network, where the defect recognizing network comprises a siamese neural network, the image feature comprises a first image feature, which is extracted from the first image through a first feature extraction network in the siamese neural network, and a second image feature, which is extracted from the first image through a second feature extraction network in the siamese neural network, the first feature extraction network is a network trained using a positive sample image in a pair of sample images, the second feature extraction network is a network trained using the first feature extraction network as a reference network and using a negative sample image in the pair of sample images, the positive sample image is an image of the object which does not have the defect, the negative sample image is an image of the object which has the defect, and the negative sample image is synthesized from the positive sample image; obtaining a similarity between the first image feature and the second image feature; and determining a recognition result of the first image according to the similarity, where the recognition result indicates whether the first object in the first image has the defect.

In another aspect, an apparatus for image recognition is provided according to embodiments of the present disclosure. The apparatus is deployed on an electronic device and comprises: a first obtaining unit, configured for obtaining a first image of a first object; a recognizing unit, configured for extracting an image feature of the first image through a defect recognizing network, where the defect recognizing network comprises a siamese neural network, the image feature comprises a first image feature, which is extracted from the first image through a first feature extraction network in the siamese neural network, and a second image feature, which is extracted from the first image through a second feature extraction network in the siamese neural network, the first feature extraction network is a network trained using a positive sample image in a pair of sample images, the second feature extraction network is a network trained using the first feature extraction network as a reference network and using a negative sample image in the pair of sample images, the positive sample image is an image of the object which does not have the defect, the negative sample image is an image of the object which has the defect, and the negative sample image is synthesized from the positive sample image; a second obtaining unit, configured for obtaining a similarity between the first image feature and the second image feature; and a determining unit, configured for determining a recognition result of the first image according to the similarity, where the recognition result indicates whether the first object in the first image has the defect.

In another aspect, a computer-readable storage medium is further provided according to embodiments of the present disclosure. The computer-readable storage medium stores a computer program, and the computer program when executed implements the above method.

In another aspect, a computer program product is further provided according to embodiments of the present disclosure. The computer program is stored in a computer-readable storage medium. A processor of a computer device reads the computer program from the computer-readable storage medium, and the processor executes the computer program to cause the computer device to implement the above method.

In another aspect, an electronic device is further provided according to embodiments of the present disclosure, including a memory and a processor. The memory stores a computer program, and the processor is configured to perform the above method when executing the computer program.

Herein the first image of the first object, which is the object that is to be detected, is obtained. Then, the image feature of the first image is extracted through the defect recognizing network. The defect recognizing network comprises the siamese neural network. The image feature comprises: a first image feature extracted from the first image through the first feature extraction network in the siamese neural network, and the second image feature extracted from the first image through a second feature extraction network in the siamese neural network. The first feature extraction network is the network trained using the positive sample image in the pair of sample images, and the second feature extraction network is the network trained using the first feature extraction network as the reference network and using the negative sample image in the pair of sample images. The positive sample image is an image of the object which does not have the defect, the negative sample image is an image of the object which has the defect, and the negative sample image is synthesized from the positive sample image. In the training, the output of the second feature extraction network is trained to be as close to the output of the first feature extraction network as possible, so that the second feature extraction network has robustness to the presence of the defect. The first feature extraction network is trained as the reference network, and it has no robustness to the presence of the defect. Thus, during the recognition, whether the first object has the defect can be determined according to whether features output by the first feature extraction network and the second feature extraction network are similar to each other. Specifically, the similarity between the first image feature and the second image feature is obtained, and the result of recognition on the first image is determined according to the similarity. The recognition result indicates whether the first object in the first image has the defect. That is, whether the first object has the defect is determined according to the similarity between features, and the features are extracted respectively from branch networks (i.e., the first feature extraction network and the second feature extraction network) in the defect recognizing network for the first image displaying the first object. Hence, the recognition result of the first image is not determined solely according to similarity between an image feature of an image displaying the first object and an image feature of an image displaying a normal object. Addressed is the technical issue of inaccurate result of recognizing an industrial part in an image in related art. A technical effect of improving accuracy of image recognition on an industrial part is achieved.

BRIEF DESCRIPTION OF THE DRAWINGS

The accompanying drawings herein are configured to provide a further understanding of the present disclosure and constitute a part of the present disclosure. Example embodiments of the present disclosure and the descriptions thereof are intended to explain the present disclosure, and do not constitute any limitation on the present disclosure.

FIG. 1 is a diagram of an application environment of a method for image recognition according to an embodiment of the present disclosure.

FIG. 2 is a flowchart of a method for image recognition according to an embodiment of the present disclosure.

FIG. 3 is a diagram of a method for image recognition according to an embodiment of the present disclosure.

FIG. 4 is a diagram of a method for image recognition according to another embodiment of the present disclosure.

FIG. 5 is a diagram of a method for image recognition according to another embodiment of the present disclosure.

FIG. 6 is a diagram of a method for image recognition according to another embodiment of the present disclosure.

FIG. 7 is a flowchart of a method for image recognition according to another embodiment of the present disclosure.

FIG. 8 is a diagram of a method for image recognition according to another embodiment of the present disclosure.

FIG. 9 is a diagram of a method for image recognition according to another embodiment of the present disclosure.

FIG. 10 is a flowchart of a method for image recognition according to another embodiment of the present disclosure.

FIG. 11 is a diagram of a method for image recognition according to another embodiment of the present disclosure.

FIG. 12 is a flowchart of a method for image recognition according to another embodiment of the present disclosure.

FIG. 13 is a flowchart of a method for image recognition according to another embodiment of the present disclosure.

FIG. 14 is a structural diagram of an apparatus for image recognition according to an embodiment of the present disclosure.

FIG. 15 is a structural diagram of an electronic device according to an embodiment of the present disclosure.

DESCRIPTION OF EMBODIMENTS

To enable a person in the art to better understand the solutions of the present disclosure, the following clearly and completely describes the technical solutions in the embodiments of the present disclosure with reference to the accompanying drawings in the embodiments of the present disclosure. Apparently, the embodiments described are only some of embodiments of the present disclosure rather than all of embodiments. Based on embodiments of the present disclosure, all other embodiments obtained by a person of ordinary skill in the art without creative efforts fall within the protection scope of the present disclosure.

The specifications, claims, and terms "first" and "second" of the foregoing accompanying drawings of the present disclosure are used to distinguish similar objects but are unnecessarily used to describe a specific sequence or order. The data used in such a way is interchangeable in proper circumstances, so that the embodiments of the present disclosure described herein can be implemented in other sequences than the sequence illustrated or described herein. In addition, terms "include" and "have", and their any variants are intended to cover the non-exclusive inclusion. For example, a process, method, system, product, or device that includes a series of operations or units is not necessarily limited to those operations or units expressly listed but can include other operations or units not expressly listed or inherent to such a process, method, product, or device.

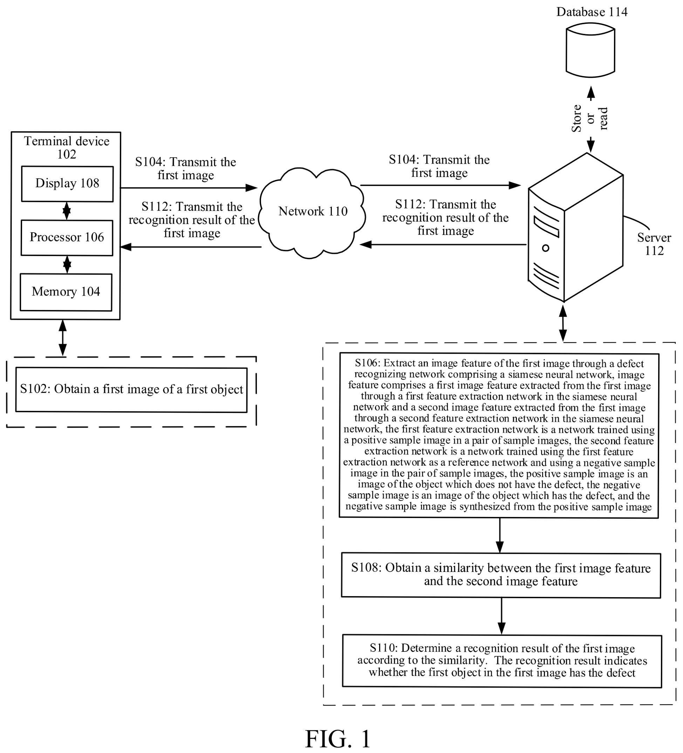

According to an aspect of embodiments of the present disclosure, a method for image recognition is provided. In embodiments of the present disclosure including the embodiments of both the claims and the specification (hereinafter referred to as "all embodiments of the present disclosure"), the method for image recognition may be applied but not limited to an environment as shown in FIG. 1. As shown in FIG. 1, a terminal device 102 includes: a memory 104, configured to store various data generated during operation of the terminal device 102; a processor 106, configured to process and calculate the foregoing data; and a display 108, configured to display a first image. The terminal device 102 may exchange data with a server 112 over a network 110. The server 112 is connected to a database 114, and the database 114 is configured to store various data. The terminal device 102 may run a program application configured to perform recognition on the first image.

A specific application process of the method is as shown in FIG. 1 and comprises following operations.

S102 to S104 are performed. The terminal device 102 obtains a first image, where the first image is a captured image of a first object, and the first object is an object that is to be detected. The terminal device 102 transmits the first image to the server 112 over the network 110.

Then, S106 to S110 are performed. When receiving the first image, the server 112 extracts an image feature of the first image through a defect recognizing network comprising a siamese neural network. The image feature comprises a first image feature extracted from the first image through a first feature extraction network in the siamese neural network and a second image feature extracted from the first image through a second feature extraction network in the siamese neural network. The first feature extraction network is a network trained using a positive sample image in a pair of sample images. The second feature extraction network is a network trained using the first feature extraction network as a reference network and using a negative sample image in the pair of sample images. The positive sample image is an image of the object which does not have the defect, the negative sample image is an image of the object which has the defect, and the negative sample image is synthesized from the positive sample image. The server 112 obtains a similarity between the first image feature and the second image feature. The server 112 determines a recognition result of the first image according to the similarity. The recognition result indicates whether the first object in the first image has the defect.

Then, S112 is performed. The server 112 sends the recognition result of the first image to the terminal device 102 over the network 110.

Herein the first image of the first object, which is the object that is to be detected, is obtained. Then, the image feature of the first image is extracted through the defect recognizing network. The defect recognizing network comprises the siamese neural network. The image feature comprises: a first image feature extracted from the first image through the first feature extraction network in the siamese neural network, and the second image feature extracted from the first image through a second feature extraction network in the siamese neural network. The first feature extraction network is the network trained using the positive sample image in the pair of sample images, and the second feature extraction network is the network trained using the first feature extraction network as the reference network and using the negative sample image in the pair of sample images. The positive sample image is an image of the object which does not have the defect (hereinafter also called the normal object), the negative sample image is an image of the object which has the defect (hereinafter also called the defective object), and the negative sample image is synthesized from the positive sample image. In the training, the output of the second feature extraction network is trained to be as close to the output of the first feature extraction network as possible, so that the second feature extraction network has robustness to the presence of the defect. The first feature extraction network is trained as the reference network, and it has no robustness to the presence of the defect. Thus, during the recognition, whether the first object has the defect can be determined according to whether features output by the first feature extraction network and the second feature extraction network are similar to each other. Specifically, the similarity between the first image feature and the second image feature is obtained, and the result of recognition on the first image is determined according to the similarity. The recognition result indicates whether the first object in the first image has the defect. That is, whether the first object has the defect is determined according to the similarity between features, and the features are extracted respectively from branch networks (i.e., the first feature extraction network and the second feature extraction network) in the defect recognizing network for the first image displaying the first object. Hence, the recognition result of the first image is not determined solely according to similarity between an image feature of an image displaying the first object and an image feature of an image displaying a normal object. Addressed is the technical issue of inaccurate result of recognizing an industrial part in an image in related art. A technical effect of improving accuracy of image recognition on an industrial part is achieved.

In all embodiments of the present disclosure, the terminal device may be a terminal device in which a client app is installed and may include, but is not limited to, at least one of: a mobile phone (such as an Android mobile phone or an iOS mobile phone), a notebook computer, a tablet computer, a palmtop, a mobile Internet device (MID), a PAD, a desktop computer, an intelligent speech interaction device, a smart home appliance, and a vehicle-mounted terminal. The client may be a video client, an instant messaging client, a browser client, an education client, or the like. The network may include, but is not limited to, a wired network or a wireless network. The wired network includes a local area network, a metropolitan area network, or a wide area network. The wireless network includes Bluetooth, wireless fidelity (Wi-Fi), and another network implementing wireless communication. The server may be a single server, or the server may be a server cluster including a plurality of servers or a cloud server. The foregoing is merely examples, and the present disclosure is not limited thereto.

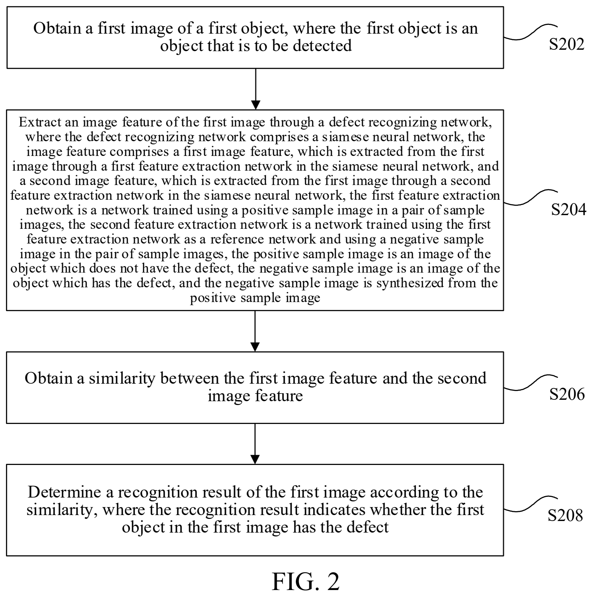

As shown in FIG. 2, in all embodiments of the present disclosure, the method for image recognition may include the following operations.

S202: Obtain a first image of a first object.

The method for image recognition may be applied to but limited to a scenario of defect detection on an industrial part. Specifically, the first object may be an object on which detection is to be made to determine whether it has a defect. The first object may be a part which needs to be detected, and the part may be of various types. When the method is applied to a scenario of defect detection on an industrial part, the first object may be the industrial part. When the method is applied to a scenario of defect detection on an automobile part, the first object may be the automobile part. When the method is applied to a scenario of defect detection on a mechanical part, the first object may be the mechanical part. The first image may be obtained through capturing an image of the first object, so that an image feature of the first image can be obtained through analyzing the first image. A first image feature of the first image is a feature concerning the first object and is extracted by a first feature extraction network in a defect recognizing network, and a second image feature of the first image is also a feature concerning the first object and is extracted by a second feature extraction network in the defect recognizing network. Thereby, it is determined whether the first object has the defect according to a similarity between the first image feature and the second image feature. The method for image recognition may be applied to a scenario of classification or defect detection on a part of a type other than the industrial part. The present disclosure is not limited thereto.

Hereinafter it is assumed that the method for image recognition is applied to the scenario of defect detection on industrial parts. The first object may refer to, but is not limited to, an industrial part that is to be detected, for example, a screw, a gear, a chain, or a pulley. The present disclosure is not limited thereto. The first image being obtained through capturing the image of the first object may refer to, but is not limited to, photographing the to-be-detected industrial part from one or more angles.

In all embodiments of the present disclosure, after the obtaining the first image, the method may further include a following operation. The first image is adjusted according to a template image for the first object to obtain an adjusted first image. The template image an image of a reference object, and the reference object and the first object both are both the aforementioned objects, i.e., they belong to the same type.

S204: Extract an image feature of the first image through a defect recognizing network, where the defect recognizing network comprises a siamese neural network, the image feature comprises a first image feature extracted from the first image through a first feature extraction network in the siamese neural network and a second image feature extracted from the first image through a second feature extraction network in the siamese neural network, the first feature extraction network is trained using a positive sample image, the second feature extraction network is trained using the first feature extraction network as a reference network and using a negative sample image, the positive sample image is an image of the object which does not have the defect, the negative sample image is an image of the object which has the defect, and the negative sample image is synthesized from the positive sample image.

The siamese neural network is a type of neural network which comprises two or more networks having the same architecture. The siamese neural network is usually configured for executing a similarity-based task. In all embodiments of the present disclosure of the present disclosure, the siamese neural network may refer to a pair of networks.

The defect recognizing network having the siamese neural network may be, but is not limited to, a distilled neural network comprising a teacher network and a student network. A network structure of the initial student network is the same as that of the teacher network. On a basis of this example, the first feature extraction network may refer to, but is not limited to, the teacher network, and the second feature extraction network may refer to, but is not limited to, the student network. Using the first feature extraction network as the reference network for training the second feature extraction network may be understood as follows. When the defect recognizing network (namely, the distilled neural network) is trained, a positive sample image feature is extracted from the positive sample image(s), which display the normal object, through the first feature extraction network (namely, the teacher network), and then the second feature extraction network (namely, the student network) is trained using the negative sample image(s), where a parameter in the second feature extraction network (namely, the student network) is iteratively adjusted, until a loss between a negative sample image feature extracted from the negative sample image(s) through the second feature extraction network (namely, the student network) and the positive sample image feature does not exceed a predetermined threshold. When the loss between the negative sample image feature and the positive sample image feature does not exceed the predetermined threshold, it is determined that the training of the defect recognizing network (namely, the distilled neural network) is completed. An objective of training is to close a gap between a classification result of the second feature extraction network and a classification result of the first feature extraction network as much as possible, so that the second feature extraction network has robustness against the displayed defect. Meanwhile, the first feature extraction network serving the reference network does not have such robustness.

Accordingly, when the first image is analyzed by the defect recognizing network, the first image may be input into the defect recognizing network (namely, the distilled neural network). When the first image is of a second type (e.g., an image not displaying the defect, that is, an image of the normal object), the image features output by the teacher network and the student network are similar or even the same. When the first image is of a first type (e.g., an image displaying the defect, that is, an image of the defective object), an image feature output by the teacher network is similar to a feature extracted from a negative sample image, while an image feature output by the student network is similar to a feature extracted from a positive sample image because the student network has the robustness. Therefore, the image features output by the two networks are greatly different. That is, when the image feature extracted by the first feature extraction network (namely, the teacher network) in the defect recognizing network (namely, the distilled neural network) is similar or identical to the image feature extracted by the second feature extraction network (namely, the student network) in the defect recognizing network (namely, the distilled neural network), it indicates that the first object in the first image and the object in the positive sample image(s) belong to the same type. Correspondingly, when the image feature extracted by the first feature extraction network (namely, the teacher network) is quite different from the image feature extracted by the second feature extraction network (namely, the student network), it indicates that the first object in the first image and the object in the negative sample image(s) belong to the same type.

In all embodiments of the present disclosure, the first feature extraction network may be trained using the positive sample image(s), each of which is an image of the normal object among a pair of sample images, and the second feature extraction network may be training using the positive sample image(s) and the negative sample image(s) in the pairs of sample images. For example, the defect recognizing network having the siamese neural network is a distilled neural network including the teacher network and the student network, the first feature extraction network is the teacher network, and the second feature extraction network is the student network. A process of training the defect recognizing network (namely, the distilled neural network) includes the following operations. For the first feature extraction network (namely, the teacher network), the positive sample image(s) of the normal object are inputted into the first feature extraction network (namely, the teacher network) to obtain an image feature extracted by the first feature extraction network (namely, the teacher network) from the positive sample image(s), and the image feature is compared with a ground-truth image feature of the positive sample image. The foregoing operations are repeated to adjust a network parameter of the first feature extraction network (namely, the teacher network) iteratively, until a loss between the image feature extracted by the first feature extraction network (namely, the teacher network) from the positive sample image and the ground-truth image feature of the positive sample image is smaller than a predetermined threshold. For the second feature extraction network (namely, the student network), the positive sample image(s) of the normal object is inputted into the second feature extraction network (namely, the student network) to obtain an image feature extracted by the second feature extraction network (namely, the student network) from the positive sample image(s), and the image feature is compared with the image feature extracted by the trained first feature extraction network (namely, the teacher network) from the positive sample image(s). The negative sample image(s) of the defective object is inputted into the second feature extraction network (namely, the student network), an image feature extracted by the second feature extraction network (namely, the student network) from the negative sample image(s) is obtained, and this mage feature is compared with the image feature extracted by the trained first feature extraction network (namely, the teacher network) from the negative sample image(s). The foregoing operations are repeated to adjust a network parameter of the second feature extraction network (namely, the teacher network) iteratively, until: a loss between the image feature extracted by the second feature extraction network (namely, the student network) from the positive sample image(s) and the image feature extracted by the first feature extraction network (namely, the teacher network) from the positive sample image(s) does not exceed a predetermined threshold, and a loss between the image feature extracted by the second feature extraction network (namely, the student network) from the negative sample image(s) and the image feature extracted by the first feature extraction network (namely, the teacher network) from the negative sample image(s) exceeds another predetermined threshold.

As an example, the first feature extraction network is trained using the positive sample image(s), each of which is an image of the normal object in a respective pair of sample images, and the second feature extraction network is trained using the positive sample image(s) and the negative sample image(s) in the pair(s) of sample images. In all embodiments of the present disclosure, before obtaining the first image, the method may further comprise following operations S1 and S2. S1: Obtain K positive sample images, each of which is an image of the normal object, and L negative sample images, each of which is an image of the defective object, K being a natural number greater than 1, and L being a natural number greater than 1. S2: Train an initialized version of defect recognizing network using the K positive sample images and the L negative sample images, until a result of comparison between an output feature of the second feature extraction network and an output feature of the first feature extraction network meets a convergence condition.

In all embodiments of the present disclosure, operation S2 may comprise following operations. The initial version of the defect recognizing network is trained using the K positive sample images and the L negative sample images, where its parameter(s) are adjusted in the training of the defect recognizing network when the comparison result does not meet the convergence condition. The defect recognizing network having the adjusted parameter(s) are further trained, until the comparison result between meets the convergence condition.

In all embodiments of the present disclosure, operation S2 may comprise following operations. The first feature extraction network in the initial version of the defect recognizing network is trained using the K positive sample images, until a first sub-convergence condition is met. The K positive sample images and the L negative sample images are input into the first feature extraction network meeting the first sub-convergence condition and the second feature extraction network in the initial version of the defect recognizing network, such that the second feature extraction network is trained until a second sub-convergence condition is met. A first sample-image feature is obtained through inputting the positive sample images into the first feature extraction network meeting the first sub-convergence condition, a second sample-image feature is obtained through inputting the positive sample images is into the second feature extraction network, a third sample-image feature is obtained through inputting the negative sample images the first feature extraction network meeting the first sub-convergence condition, and a fourth sample-image feature is obtained through inputting the negative sample images into the second feature extraction network. The second sub-convergence condition indicates that a similarity between the first sample-image feature and the second sample-image feature is greater than a seventh threshold, while a similarity between the third sample-image feature and the fourth sample-image feature is smaller than an eighth threshold.

A manner of obtaining the L negative sample images may comprise but is not limited to: obtaining the K positive sample images; and adjusting L positive sample images among the K positive sample images to obtain the L negative sample images.

In all embodiments of the present disclosure, training the initial version of the defect recognizing network using the K positive sample images and the L negative sample images until the result of comparison between the output feature of the second feature extraction network and the output feature of the first feature extraction network meets the convergence condition may comprise following operations.

S1: Train the first feature extraction network in the initial version of the defect recognizing network using the K positive sample images, until a first sub-convergence condition is met. S2: Input the K positive sample images and the L negative sample images into the first feature extraction network meeting the first sub-convergence condition and the second feature extraction network in the initial version of the defect recognizing network to train the first and second feature extraction network, until a second sub-convergence condition is met. A first sample-image feature is obtained through inputting the positive sample images into the first feature extraction network meeting the first sub-convergence condition. A second sample-image feature is obtained through inputting the positive sample images into the second feature extraction network. A third sample-image feature is obtained through inputting the negative sample images into the first feature extraction network meeting the first sub-convergence condition. A fourth sample-image feature is obtained through inputting the negative sample images into the second feature extraction network. The second sub-convergence condition indicates that a similarity between the first sample-image feature and the second sample-image feature is greater than a seventh threshold and a similarity between the third sample-image feature and the fourth sample-image feature is smaller than an eighth threshold.

The first sub-convergence condition may include but is not limited to: a similarity between an image feature through inputting each positive sample image into the first feature extraction network and a ground-truth image feature of such positive sample image is greater than a ninth threshold.

For example, training the first feature extraction network in the initial version of the defect recognizing network using the K positive sample images, until the first sub-convergence condition is met may include but is not limited to following operations. The K positive sample images serve as a current positive sample image one by one, and following operations are performed until the first sub-convergence condition is met. The current positive sample image is inputted into the first feature extraction network to obtain an image feature output by the first feature extraction network. A similarity between the image feature output by the first feature extraction network and a ground-truth image feature of the current positive sample image is obtained. It is determined whether the similarity is greater than the ninth threshold. The training terminals when the similarity is greater than the ninth threshold. When the similarity is smaller than the ninth threshold, a next positive sample image serves as the current positive sample image, and the foregoing operations are repeated.

In all embodiments of the present disclosure, an initial version of the first feature extraction network and an initial version of the second feature extraction network may share the same network structure. Each network may comprise, but is not limited to: a deep convolutional neural network structure (for example, Residual Network-50 (ResNet-50)), a convolutional neural network model (for example, Vision Transformer (ViT)), a deep convolutional neural network model (for example, Visual Geometry Group 16 (VGG-16)) pre-trained model, or the like.

In all embodiments of the present disclosure, operation S2 may include but is not limited to following operations. The K positive sample images serve as a current positive sample image one by one, and the negative sample image, in the same pair of sample images as the current positive sample image, among the L negative sample images serve as a current negative sample image. Following operations are performed until the second sub-convergence condition is met. The current positive sample image and the current negative sample image are separately inputted into the first feature extraction network that has met the first sub-convergence condition, to obtain a first sample-image feature and a third sample-image feature, respectively. The current positive sample image and the current negative sample image are separately inputted into the second feature extraction network to obtain a second sample-image feature and a fourth sample-image feature, respectively. It is determined determining whether a similarity between the first sample-image feature and the second sample-image feature is greater than the seventh threshold and a similarity between the third sample-image feature and the fourth sample-image feature is smaller than the eighth threshold. The training terminates when the similarity between the first sample-image feature and the second sample-image feature is greater than the seventh threshold and the similarity between the third sample-image feature and the fourth sample-image feature is smaller than the eighth threshold .

S206: Obtain the similarity between the first image feature and the second image feature.

S208: Determine a recognition result of the first image according to the similarity, where the recognition result indicates whether the first object in the first image has the defect.

In all embodiments of the present disclosure, the similarity between the first image feature and the second image feature may, but is not limited to, be determined through a regression loss function. For example, the similarity between the first image feature and the second image feature is obtained through a mean square error (L2 loss) regression loss function as below:

$$\text{Loss}(x, y) = \frac{1}{n}\sum_{i=1}^{n}(y_i - f(x_i))^2 \quad (1)$$

The parameter n in the function is a quantity of dimensions of the image feature of the first image, the parameter $x_i$ in the function represents the first image feature in an $i^{th}$ dimension, and the parameter $y_i$ in the function represents the second image feature in the $i^{th}$ dimension. When a value of Loss(x, y) is greater than a particular threshold (for example, 0.5), it indicates that a difference between the first image feature and the second image feature is large, and the similarity between the first image feature and the second image feature is small. Hence, the first object in the first image is determined to have the defect. When the value of Loss(x, y) is smaller than or equal to 0.5, it indicates that the difference between the first image feature and the second image feature is small, and the similarity between the first image feature and the second image feature is large. Hence, the first object in the first image is determined to not have the defect. The similarity between the first image feature and the second image feature may alternatively be determined using another loss function, which is not limited herein.

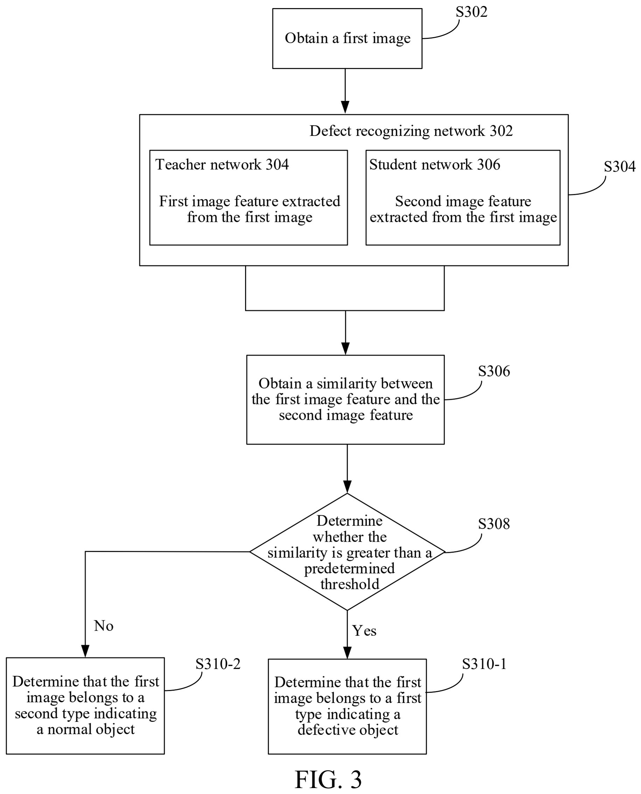

As an example, the method for image recognition is applied to a scenario of defect detection on an industrial part. Assuming that the first object is a screw, the first image is a captured image of the screw. In this embodiment, the method may comprise following operations as shown in FIG. 3:

S302: Obtain a first image, which is a captured image of a screw.

S304: Extract a first image feature and a second image feature from the first image through a defect recognizing network 302 comprising a siamese neural network. In an embodiment, the first image feature is extracted from the first image through a teacher network 304 in the defect recognizing network, and the second image feature is extracted from the first image through a student network 306 in the defect recognizing network.

S306: Compare the first image feature with the second image feature to obtain a similarity between the first image feature and the second image feature.

S308: Determine whether the similarity between the first image feature and the second image feature is greater than a predetermined threshold. In case of positive determination, the process proceeds to S310-1: determine that the first image belongs to a second type indicating a normal object, that is, the screw does not have a defect. In case of negative determination, the process proceeds to S310-2: determine that the first image belongs to a first type indicating a defective object, that is, the screw has the defect.

An image feature extracted by the student network from each positive sample image is identical to an image feature extracted by the teacher network from the positive sample image. An image feature extracted by the student network from each negative sample image is different from an image feature extracted by the teacher network from the negative sample image.

Herein the first image of the first object, which is the object that is to be detected, is obtained. Then, the image feature of the first image is extracted through the defect recognizing network. The defect recognizing network comprises the siamese neural network. The image feature comprises: a first image feature extracted from the first image through the first feature extraction network in the siamese neural network, and the second image feature extracted from the first image through a second feature extraction network in the siamese neural network. The first feature extraction network is the network trained using the positive sample image in the pair of sample images, and the second feature extraction network is the network trained using the first feature extraction network as the reference network and using the negative sample image in the pair of sample images. The positive sample image is an image of the object which does not have the defect, the negative sample image is an image of the object which has the defect, and the negative sample image is synthesized from the positive sample image. In the training, the output of the second feature extraction network is trained to be as close to the output of the first feature extraction network as possible, so that the second feature extraction network has robustness to the presence of the defect. The first feature extraction network is trained as the reference network, and it has no robustness to the presence of the defect. Thus, during the recognition, whether the first object has the defect can be determined according to whether features output by the first feature extraction network and the second feature extraction network are similar to each other. Specifically, the similarity between the first image feature and the second image feature is obtained, and the result of recognition on the first image is determined according to the similarity. The recognition result indicates whether the first object in the first image has the defect. That is, whether the first object has the defect is determined according to the similarity between features, and the features are extracted respectively from branch networks (i.e., the first feature extraction network and the second feature extraction network) in the defect recognizing network for the first image displaying the first object. Hence, the recognition result of the first image is not determined solely according to similarity between an image feature of an image displaying the first object and an image feature of an image displaying a normal object. Addressed is the technical issue of inaccurate result of recognizing an industrial part in an image in related art. A technical effect of improving accuracy of image recognition on an industrial part is achieved.

In all embodiments of the present disclosure, determining the recognition result of the first image according to the similarity comprises: in response to the similarity being smaller than or equal to a first threshold, determining that the first image belongs to a first type, where the first type indicates that the first object has the defect; and in response to the similarity being larger than or equal to a second threshold, determining that the first image belongs to a second type, where the second type indicates that the first object does not have the defect, and the first threshold is smaller than the second threshold.

In all embodiments of the present disclosure, the similarity may be, but is not limited to, a loss between the first image feature and the second image feature. A large loss between the first image feature and the second image feature indicates a small similarity between the first image feature and the second image feature, and a small loss between the first image feature and the second image feature indicates a large similarity between the first image feature and the second image feature.

As an example, the similarity between the first image feature and the second image feature is 0.2. Assuming that the first threshold is 0.3 and the second threshold is 0.5, the method comprises following operations in this example. The first image feature is compared with the second image feature to obtain the similarity between the first image feature and the second image feature, namely, 0.2. It is determined that the similarity (0.2) between the first image feature and the second image feature is smaller than the first threshold (0.3), and hence the recognition result is that the first image belongs to the first type indicating the defective object, that is, the first object has the defect.

As an example, the similarity between the first image feature and the second image feature is 0.6. Assuming that the first threshold is 0.3 and the second threshold is 0.5, t the method comprises following operations in this example. The first image feature is compared with the second image feature to obtain the similarity between the first image feature and the second image feature, namely, 0.6. It is determined that the similarity (0.6) between the first image feature and the second image feature is greater than the second threshold (0.5), and hence the recognition result is that the first image belongs to the second type indicating the normal object, that is, the first object does not have the defect.

Here when the similarity is smaller than or equal to the first threshold, the first object is determined to have the defect, and the recognition result is that the first image belongs to the first type indicating the defective object, and when the similarity is greater than or equal to the second threshold, the first object is determined to not have the defect, and the recognition result is that the first image belongs to the second type indicating the normal object. The first threshold is smaller than the second threshold. Hence, whether the first object has the defect is determined according to the similarity between features, which are extracted from the first image of the first object through different branch networks (namely, the first feature extraction network and the second feature extraction network), respectively, in the defect recognizing network. The recognition result of the first image does not depend solely on a similarity between an image feature of an image of the first object and an image feature of an image of the normal object. Addressed is the technical issue of inaccurate result of recognizing an industrial part in an image in related art. A technical effect of improving accuracy of image recognition on an industrial part is achieved.

In all embodiments of the present disclosure, i after obtaining the first image, the method further comprises following operations.

S1: Obtain a template image for the first object, wherein the template image is an image of a reference object, and the reference object is the object which does not have the defect.

The template image may be obtained through, but is not limited to, the following operations. The object, on which detection has been made and which is determined has no defect at all, is determined to serve as the reference object. This object is captured from all candidate detection angles for the image recognition to obtain the template image(s).

S2: Adjust the first image according to a pose of the reference object in the template image to obtain an adjusted first image, where a pose of the first object in the adjusted first image is aligned with a pose of the reference object in the template image.

The pose of the first object in the first image may refer to but is not limited to: orientation, an angle, and/or a position of displaying the first object in the first image. The pose of the first object in the adjusted first image being aligned with the pose of the reference object in the template image may refer to, but is not limited to, that the orientation, the angle, and/or the position of displaying the first object in the first image are consistent with the orientation, the angle, and/or the position, respectively, of displaying the reference object in the template image. Further, the adjustment on the pose of displaying the first object in the first image may be implemented by, but is not limited to, applying a matrix representing transformation from the first image to the template image.

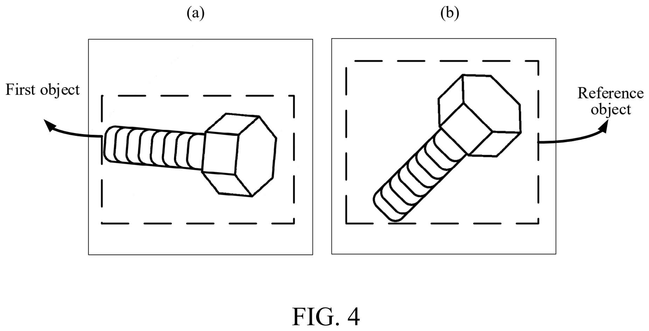

For example, an image as shown in subfigure (a) in FIG. 4 is the first image, and the first object in the first image is a screw. An image as shown in subfigure (b) in FIG. 4 is a template image, and a reference object in the template image is also a screw. Operation S2 may comprise, but is not limited to, adjusting the orientation, the angle, and/or the position of the first object displayed in subfigure (a) so that they are consistent with the orientation, the angle, and/or the position of the reference object displayed in subfigure (b) in FIG. 4.

Here the template image for the first object is obtained. The template image is the image of the reference object, and both the reference object and the first object belong to the same type (that is, they are both the aforementioned object). The reference object is a normal object. Then, the first image is adjusted according to the pose of the reference object in the template image to obtain the adjusted first image, and a pose of the first object in the adjusted first image is aligned with (i.e., similar to or the same as) the pose of reference object in the template image. In other words, the pose of displaying the first object in the first image is corrected with reference to the template image for the first object, so that the first image is "standardized", and the feature of the first image can be accurately extracted through the defect recognizing network. A technical effect of improving accuracy of image recognition on an industrial part is achieved.

In all embodiments of the present disclosure, adjusting the first image according to the pose of the reference object in the template image to obtain the adjusted first image may comprise following operations.

S1: Determine an edge of the reference object in the template image through edge detection to obtain a first edge image and determine an edge of the first object in the first image through edge detection to obtain a second edge image.

The edge detection processing is performed on the reference object in the template image and the first object in the first image. A manner of the edge detection may be, but not limited to, a differentiation method, a differential edge detection method, a Roberts edge detection operator, a Sobel edge detection operator, and a Laplace edge detection operator. The present disclosure is not limited thereto.

The Roberts edge detection operator utilizes respective differences between two adjacent pixels in diagonal directions, where a principle lies in that differences in any pair of perpendicular directions may be used to calculate a gradient. The Roberts gradient is calculated. The Roberts detector is simple and has limited functions. For example, the Roberts detector is asymmetrical and cannot detect an edge at an angle equal to a multiple of 45°. The Roberts detector is simple and fast and therefore is often implemented in hardware. The Sobel edge detection operator is configured for examining a weighted difference among grayscales of upper, lower, left, and right neighbors for each pixel in a digital image. The Laplace edge detection operator is a second-order differential operator. The Laplace edge detection differs from other edge detection methods in that it applies isotropic detection, that is, a degree of enhancement on an edge is irrelevant to a direction of the edge, and hence it can meet a requirement on sharpening edges in different directions.

S2: Obtain a first set of points representing the edge of the reference object from the first edge image and obtain a second set of points representing the edge of the first object from the second edge image.

In all embodiments of the present disclosure, obtaining the first set of points representing the edge of the reference object from the first edge image may comprise but is not limited to following operations. All key positions in the first edge image are converted into points in a first coordinate system through a non-maximum suppression (NMS) algorithm to obtain the first set of points. Correspondingly, obtaining the second set of points representing the edge of the first object from the second edge image may comprise but is not limited to following operations. All key positions in the second edge image are converted into points in a second coordinate system through a non-maximum suppression (NMS) algorithm to obtain the second set of points. The NMS algorithm is widely applied to conventional algorithms of target detection in the field of feature extraction and deep learning. A principle of the NMS algorithm is obtaining a local maximum through filtering to obtain an optimal solution. In two-dimensional edge extraction, the NMS algorithm discards points having a small change rate along some gradient directions after the edge has been determined, such that the interference of these points can be prevented. The NMS algorithm also plays an important role in three-dimensional keypoint detection, where it discards a non-local extreme value in a feature.

In all embodiments of the present disclosure, after obtaining the first set of points representing the edge of the reference object from the first edge image and obtaining the second set of points representing the edge of the first object from the second edge image, the method may further comprise a following operation. Error points in the first set and the second set are discarded.

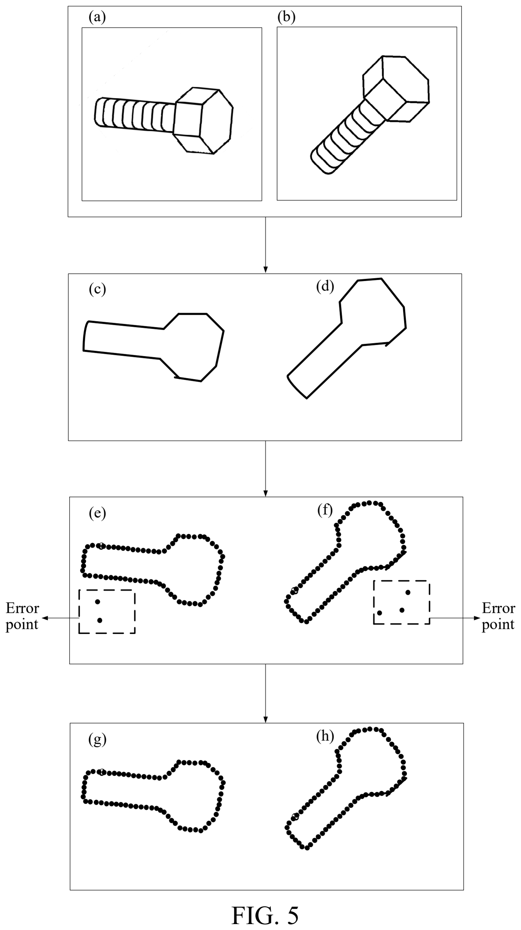

For example, an image as shown in subfigure (a) in FIG. 5 is the first image, and the first object in the first image is a screw. An image as shown in subfigure (b) in FIG. 5 is a template image, and a reference object in the template image is also a screw. Operation S1 may comprise but is not limited to following operations. An edge of the first object in subfigure (a) in FIG. 5 is determined to obtain an edge image of the first object (namely, the first edge image) as shown in subfigure (c) in FIG. 5. An edge of the reference object in subfigure (b) in FIG. 5 is determined to obtain an edge image of the reference object (namely, the second edge image) as shown in subfigure (d) in FIG. 5.

Operation S2 may comprise but is not limited to following operations. A set of points representing the edge of the reference object (namely, the first set) as shown in (e) in FIG. 5 is obtained from the first edge image of the reference object in subfigure (c) in FIG. 5 through the NMS algorithm. A set of points representing the edge of the first object (namely, the second set) as shown in (f) in FIG. 5 is obtained from the second edge image of the first object in subfigure (d) in FIG. 5 through the NMS algorithm.

Then, error points that do not belong to the edge of the reference object but are in the set of points representing the edge of the reference object (namely, the first set) as shown in subfigure (e) in FIG. 5 is discarded, and error points that do not belong to the edge of the first object but are in the set of points representing the edge of the first object (namely, the second set) as shown in subfigure (f) in FIG. 5 is discarded. Thereby, the first set that does not have the error point is obtained as shown in subfigure (g) in FIG. 5, and the second set that does not have the error point is obtained as shown in subfigure (h) in FIG. 5.

S3: Determine a transform matrix according to a mapping relationship between the points in the first set and the points in the second set, wherein each point in the second set is mapped to a respective point in the first set.

Before determining the transform matrix according to the mapping relationship between the first set and the second set, the method may further comprise but is not limited to a following operation. The mapping relationship between all points in the first set and all points in the second set is determined through nearest neighbor search. The nearest neighbor search is also called closest point search and refers to an optimization problem of searching for a point that is closest to a query point in a scale space. The nearest neighbor search is widely applied to many fields, such as computer vision, information retrieval, data mining, machine learning, and large-scale learning, and it is most widely applied to the field of computer vision, such as computer graphics, image retrieval, copy retrieval, object recognition, scene recognition, scene classification, posture evaluation, and feature matching.

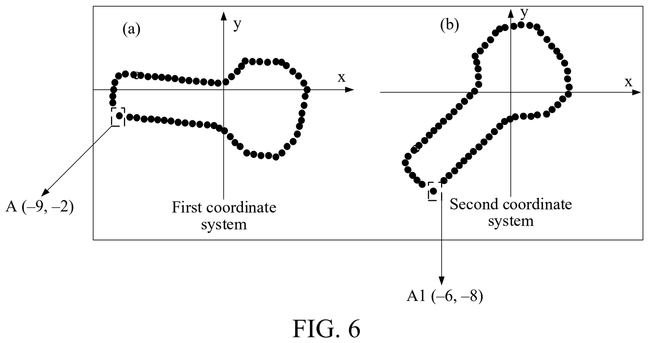

As an example, a set of points as shown in subfigure (a) in FIG. 6 is the first set, and a set of points as shown in subfigure (b) in FIG. 6 is the second set. In this example, following operations may be performed, where the focus of illustration is put on point A in the first set and point A1 in the second set. Coordinates of each point in the first set in the first coordinate system, in which the first set of points is located, are determined, and coordinates of each point in the second set in the second coordinate system, in which the second set of points is located, are determined. Coordinates of point A in the first set as shown in subfigure (a) in FIG. 6 in the first coordinate system are (-9, -2), and coordinates of point A1 in the second set shown in subfigure (b) in FIG. 6 in the second coordinate system are (-6, -8). Then, the matching relationship between all points in the first set and all points in the second set is determined through the nearest neighbor search. Because both point A in the first set and point A1 in the second set are located at the tail of the corresponding screw, and mapping {(-9, -2), (-6, -8)} is constructed between point A in the first set and point A1 in the second set.

Operation S3 may further comprise but is not limited to a following operation. The transform matrix is determined through a machine vision algorithm (e.g., random sample consensus, ransac) using the mapping relationship between the points in the first set and the points in the second set.

S4: Adjust positions of the points in the second set using the transform matrix to obtain a third set of points representing the edge of the first object in the adjusted first image, where the position of each point in the second set is adjusted according to the transform matrix to obtain the position of a respective point in the third set, and the respective point in the third set is determined to correspond to the point, which is mapped to said point in the second set, in the first set.

In some exemplary embodiments, step S4 may comprise, but is not limited to a following step. Coordinates of the points in the second set are multiplied by the transform matrix to obtain coordinates of the points in the third set, where the third set forms the adjusted first image.

Herein the edge detection is performed on the reference object in the template image to obtain the first edge image, and the edge detection processing also is performed on the first object in the first image to obtain the second edge image. Then, the first edge image is converted into the first set of points, and the second edge image is converted into the second set of points. Afterwards, the transform matrix is determined according to the mapping relationship between the first set and the second set. The adjustment on the first image (i.e., on the second set) is performed according to the transform matrix to obtain the adjusted first image comprising the third set of points, where the position of each point in the third set in the adjusted first image corresponds to the position of the respective point in the first set in the template image. In other words, the pose of the first object in the first image is adjusted with reference to the template image for the first object, so that the first image is standardized, and the feature of the first image can be accurately extracted through the defect recognizing network. A technical effect of improving accuracy of image recognition on an industrial part is achieved.

In all embodiments of the present disclosure, determining the transform matrix according to a mapping relationship between the points in the first set and the points in the second set may comprise following operations.

S1: Determine a current transform matrix for a current iteration.

S2: Adjust positions of points in the second set using the current transform matrix to obtain a reference set of points representing a transformed edge of the first object, where the position of each point in the second set is adjusted according to the transform matrix to obtain the position of a respective point in the reference set, and the respective point in the reference set is determined to correspond to the point, which is mapped to said point in the second set, in the first set.

S3: Determine a difference between a position of each point in the reference set and a position of a respective point, which corresponds to said point in the reference set, in the first set to obtain a respective difference.

In all embodiments of the present disclosure, after operation S3, the method may further comprise a following operation. The point(s), each of which the difference is greater than a fifth threshold, are removed from the reference set, where the fifth threshold is an integer greater than 0.

S4: Determine a transform error between the points in the reference set and the points in the first set according to the determined differences.

S5: When the transform error does not meet a convergence condition (i.e., a condition indicates that the transform error has converged throughout the iterations), adjust the current transform matrix to obtain a new current transform matrix, and return to operation S2 for a next iteration, that is, positions of points in the second set are adjusted according to the new current transform matrix.

S6: Determine the current transform matrix to serve as the transform matrix, when the transform error meets the convergence condition.

In all embodiments of the present disclosure, the convergence condition may be, but is not limited to, that the transform error has been than a sixth threshold for N consecutive iterations.

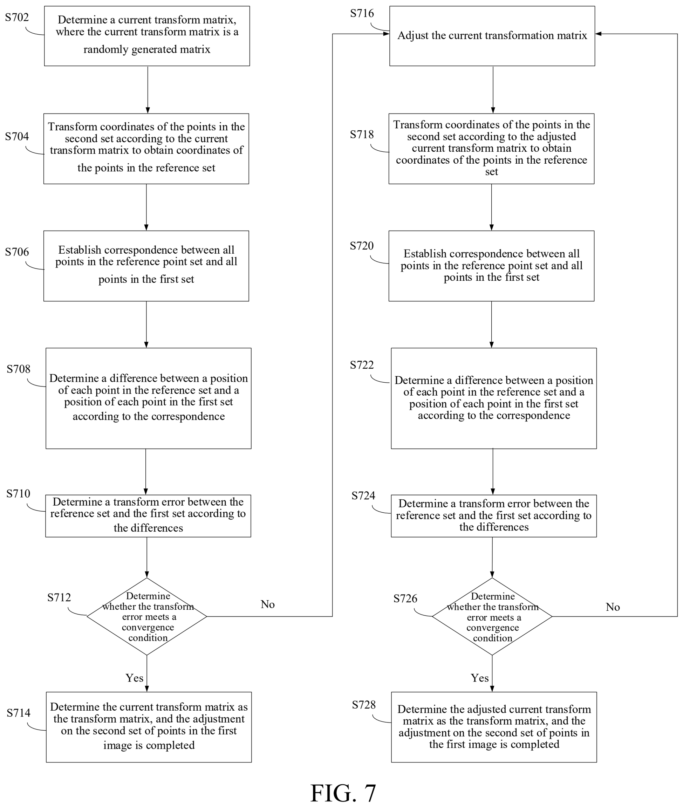

As an example, the method comprises the following operations as shown in FIG. 7.

S702: Determine a current transform matrix, where the current transform matrix is a randomly generated matrix.

S704: Transform coordinates of the points in the second set using the current transform matrix to obtain coordinates of the points in the reference set.

S706: Establish correspondence between all points in the reference point set and all points in the first set.

S708: Determine a difference between a position of each point in the reference set and a position of each point in the first set according to the correspondence.

For example, the reference set comprise K points representing the edge (hereinafter called edge points), the first set comprises K edge points, a position difference between a $k^{th}$ edge point in the reference set and a $k^{th}$ edge point in the first set, which correspond to each other, is as shown in equation (2). The difference is a second-order Euclidean distance between the $k^{th}$ edge point in the reference set and the $k^{th}$ edge point in the first set:

$$w_k = ||p_k - p_k^t|| \quad (2)$$

$w_k$ is the position difference between the $k^{th}$ edge point in the reference set and the $k^{th}$ edge point in the first set. $p_k$ is coordinates of the $k^{th}$ edge point in the reference set in the second coordinate system, and $p_k^t$ is coordinates of the $k^{th}$ edge point in the first set in the first coordinate system.

The difference between the $k^{th}$ edge point in the reference set and the $k^{th}$ edge point in the first set may be further modified as:

$$W_k = \frac{w_k}{K} \quad (3)$$

$W_k$ is the modified difference between the $k^{th}$ edge point in the reference set and the $k^{th}$ edge point in the first set. K is a total quantity of edge points in the reference set and is also a total quantity of edge points included in the first set. $w_k$ is the above difference between the $k^{th}$ edge point in the reference set and the $k^{th}$ edge point in the first set.

S710: Determine a transform error between the reference set and the first set according to the differences.

For example, the reference set comprises the K edge points, and the first set comprises the K edge points, the transform error between the reference set and the first set may be calculated as:

$$F = \sum_{k=1}^{K} W_k \quad (4)$$

F is the transform error between the reference set and the first set, and $W_k$ is the difference (or modified difference) between the $k^{th}$ edge point in the reference set and the $k^{th}$ edge point in the first set.

S712: Determine whether the transform error meets a convergence condition. For example, the transform error between the reference set and the first set is F, it is determined whether F is smaller than a sixth threshold.

In case of positive determination, the process proceeds to S714: determine the current transform matrix as the transform matrix, and the adjustment on the second set of points in the first image is completed. In case of positive determination, the process proceeds to S716: adjust the current transform matrix to be the adjusted transform matrix. In an embodiment, this adjustment utilizes the Ransac algorithm according to the correspondence between the points in the first set and the points in the reference set. The adjusted transform matrix serves as the current transform matrix for the next iteration.

S718 to S724 in the next iteration: adjust the points in the current reference set according to the adjusted current transform matrix, establish correspondence between each edge point in the reference set and each edge point in the first set, determine a difference between a position of each edge point in the reference set and a position of the corresponding edge point in the first set according to the correspondence, and determine a transform error between the reference set and the first set according to the determined differences.

S726: Determine whether the transform error meets the convergence condition. I n case of positive determination, the process proceeds to S728: determine the current transform matrix as the transform matrix, and the adjustment on the second set of points in the first image is completed. A process from S716 to S726 is repeated when the transform error keeps not meeting the convergence condition. The iterations terminate when the transform error meets the convergence condition.

Here the current transform matrix is determined. Then, the points in the second set are adjusted in coordinates according to the current transform matrix to obtain the points in the reference set. The difference between the position of each edge point in the reference set and the position of each edge point in the first set is determined according to the correspondence between all points in the first set and all points in the reference set, and thus multiple differences (or modified differences) can be obtained. The transform error between the reference set and the first set is determined through these differences. When the transform error does not meet the convergence condition, the current transform matrix is adjusted to obtain the adjusted transform matrix, and the points in the second set are adjusted in coordinates according to the adjusted transform matrix. When the transform error meets the convergence condition, the current transform matrix is determined to serve as the transform matrix. In other words, the pose of the first object in the first image is adjusted with reference to the template image for the first object, so that the first image is standardized, and the feature of the first image can be accurately extracted through the defect recognizing network. A technical effect of improving accuracy of image recognition on an industrial part is achieved.

In all embodiments of the present disclosure, extracting the image feature of the first image through the defect recognizing network may comprise following operations.

S1: Divide the first image into N first image blocks, N being a positive integer greater than 1.

S2: Extract a respective feature of each of the N first image blocks through the defect recognizing network to obtain the image feature.

In all embodiments of the present disclosure, dividing the first image into the N first image blocks may comprise one of the following options. In a first option, the first image is divided into N image blocks, where a size of each of the N image blocks is equal to a preset size, and the N image blocks serve as the N first image blocks. In a second option, the first image is cropped to obtain N image blocks from the first image, where a respective key portion of the first object is displayed in each of the N image blocks, and the N image blocks serve as the N first image blocks.

In all embodiments of the present disclosure, extracting the respective feature of each of the N first image blocks through the defect recognizing network to obtain the image feature comprises may comprise following operations. The N first image blocks are sequentially determined as the current image block. For the current image block, the current image block is input into the first feature extraction network to obtain a first current sub-image feature, the current image block is input into the second feature extraction network to obtain a second current sub-image feature. The first image feature comprises the first current sub-image feature of each first image block, and the second image feature comprises the second current sub-image feature of each first image block.

Here the first image is divided to obtain the N first image blocks, N being a positive integer greater than 1. Then, the features of the N first image blocks are extracted through the defect recognizing network to obtain the image feature. In other words, the first image is divided to obtain the N first image blocks of which respective features are extracted as the image feature, and thus the first object is determined to have the defect as long as the defect is detected in any one of the N first image blocks. Recognition efficiency of image recognition is improved. Further, the first image is divided to obtain the N first image blocks of which respective features are extracted as the image feature, and thus the defect can be quickly located in the first mage as long as the defect is detected in any one of the N first image blocks. The repairment on the defective object is facilitated.

In all embodiments of the present disclosure, dividing the first image into the N first image blocks may comprise one of the two options.

In the first option, the first image is divided into the N image blocks, where the size of each of the N image blocks is equal to the preset size, and the N image blocks serve as the N first image blocks.

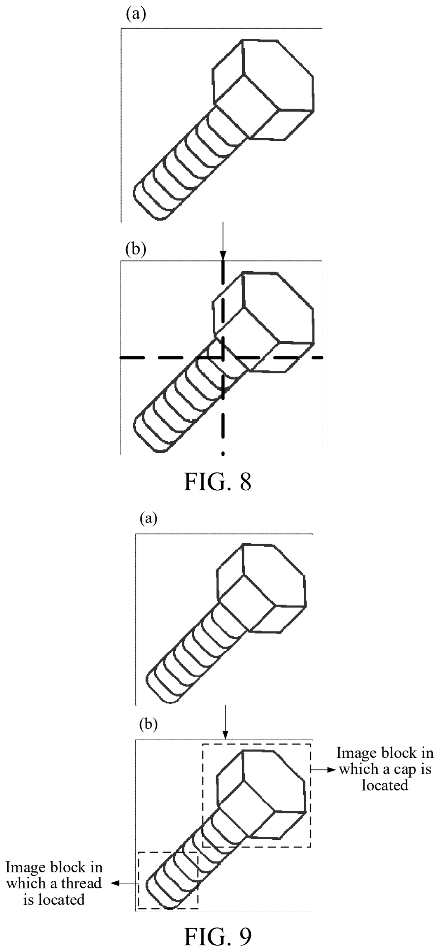

As an example, the first image is an image as shown in subfigure (a) in FIG. 8, and the first image is divided according to the preset size to obtain four first image blocks having the same preset size as shown in subfigure (b) in FIG. 8.

In the second option, the first image is cropped to obtain the N image blocks from the first image, where the respective key portion of the first object is displayed in each of the N image blocks, and the N image blocks serve as the N first image blocks.

The key portion of the first object may be a portion-of-interest depending on a type of the first object. As an example, the key portion may be a portion at which the defect is to be detected. For example, the key portion of the screw may be a cap and a thread.

As an example, the first image is an image as shown in subfigure (a) in FIG. 9. The method comprises following operations in this example. The first object in the first image is determined to be a screw, and the cap and the thread on the screw is determined to be the key portion, as shown in subfigure (a) in FIG. 9. Two key image blocks as shown in subfigure (b) in FIG. 9 are obtained from the first image through cropping, namely, an image block which displays the cap and an image block which displays the thread are obtained from the first image, as shown in subfigure (b) in FIG. 9.

Here the first image is divided according to the preset size to obtain the N image blocks having the same preset size, and the N image blocks are determined to serve as the N first image blocks. When the feature extraction is performed on the N first image blocks through the defect recognizing network to obtain the image feature, the first object is determined to have the defect as long as the defect is defected from any one of the N first image blocks. Thereby, recognition efficiency of image recognition is improved. Alternatively, the first image is cropped to obtain the N key image blocks. The key image blocks are the image blocks in which the key portion of the first object is located, and the N key image blocks are determined to serve as the N first image blocks. A volume of data that needs to be processed by the defect recognizing network is reduced, and recognition efficiency of image recognition is also improved.

In all embodiments of the present disclosure, extracting the respective feature of each of the N first image blocks through the defect recognizing network to obtain the image feature may comprise following operations.

The N first image blocks serve as the current image block sequentially. Following operations are performed on each image block that serves as the current image block.

The current image block is inputted into the first feature extraction network to obtain a first current sub-image feature. The current image block is inputted into the second feature extraction network to obtain a second current sub-image feature. The first image feature comprises the first current sub-image feature of each first image block, and the second image feature comprises the second current sub-image feature of each first image block.

As an example, the N first image blocks include first image block A, first image block B, and first image block C. When the first object in the first image is the normal object, the method comprises following operations in this example.

First image block A is inputted into the first feature extraction network to obtain first sub-image feature A1 and is inputted into the second feature extraction network to obtain second sub-image feature A2. Similarity between first sub-image feature A1 and first sub-image feature A2 is obtained, and it is determined that the similarity is greater than a second threshold. First image block B is inputted into the first feature extraction network to obtain first sub-image feature B1 and is inputted into the second feature extraction network to obtain second sub-image feature B2. Similarity between first sub-image feature B1 and first sub-image feature B2 is obtained, and it is determined that the similarity is greater than the second threshold. First image block C is inputted into the first feature extraction network to obtain first sub-image feature C1 and is inputted into the second feature extraction network to obtain second sub-image feature C2. Similarity between first sub-image feature C1 and first sub-image feature C2 is obtained, and it is determined that the similarity is greater than the second threshold. Thereby, the first object in the first image is determined to not have the defect.

As another embodiment, the N first image blocks include first image block A, first image block B, and first image block C. When the first object in the first image is the defective object and the defect is located at a region of first image block B, the method comprises following operations in this example.

First image block A is inputted into the first feature extraction network to obtain first sub-image feature A1 and is inputted into the second feature extraction network to obtain second sub-image feature A2. Similarity between first sub-image feature A1 and first sub-image feature A2 is obtained, and it is determined that the similarity is greater than a second threshold. First image block B is inputted into the first feature extraction network to obtain first sub-image feature B1 and is inputted into the second feature extraction network to obtain second sub-image feature B2. Similarity between first sub-image feature B1 and first sub-image feature B2 is obtained, and it is determined that the similarity is smaller than the first threshold. First image block C is inputted into the first feature extraction network to obtain first sub-image feature C1 and is inputted into the second feature extraction network to obtain second sub-image feature C2. Similarity between first sub-image feature C1 and first sub-image feature C2 is obtained, and it is determined that the similarity is greater than the second threshold. Thereby, the first object in the first image is determined to have the defect, and the defect is determined to be at the region of first image block B.

Herein all N first image blocks are sequentially determined as the current image block, and the following operations are performed on the current image block. The current image block is inputted into the first feature extraction network to obtain a first current sub-image feature. The current image block is inputted into the second feature extraction network to obtain a second current sub-image feature. The first image feature comprises the first current sub-image feature of each first image block, and the second image feature comprises the second current sub-image feature of each first image block. In other words, the first image is divided to obtain the N first image blocks of which respective features are extracted as the image feature, and thus the first object is determined to have the defect as long as the defect is detected in any one of the N first image blocks. Recognition efficiency of image recognition is improved. Further, the first image is divided to obtain the N first image blocks of which respective features are extracted as the image feature, and thus the defect can be quickly located in the first mage as long as the defect is detected in any one of the N first image blocks. The repairment on the defective object is facilitated.

In all embodiments of the present disclosure, before obtaining the first image, the method may further comprise following operations.

S1: Construct K pairs of sample images, where each of the K pairs of sample images comprises a respective positive sample image displaying the object not having the defect and a respective negative sample image displaying the object having the defect, the negative sample image is obtained by adjusting the positive sample image, and K is an integer number greater than 1.

In all embodiments of the present disclosure, before operation S1, the method may include but is not limited to following operations. A pose of the object in each of the K positive sample images is adjusted, and the respective one of the K negative sample images is generated on a basis of such positive sample image with the object having the adjusted pose. The adjustment may refer to the foregoing embodiments related to adjusting the pose of the first object in the first image. Details are not repeated herein.

S2: Train an initial version of the defect recognizing network using the K pairs of sample images, until a result of comparison between an output feature of the second feature extraction network and an output feature of the first feature extraction network meets a convergence condition.

In all embodiments of the present disclosure, operation S2 may comprise following operations. The initial version of the defect recognizing network is trained using the K positive sample images and the K negative sample images. During the training, parameters of the first feature extraction network are fixed, the K positive sample images into the first feature extraction network to obtain the output feature of the first feature extraction network, and this feature affects training of the second feature extraction network. That is, network parameter(s) in the second feature extraction network are iteratively adjusted, until the result of comparison between the output features of the second feature extraction network and the output features of the first feature extraction network meets the convergence condition. When the parameters in the first feature extraction network are fixed, determining whether the comparison result between the output feature of the second feature extraction network and the output feature of the first feature extraction network meets the convergence condition may comprise but is not limited to following operations. Each positive sample image is inputted into the first feature extraction network to obtain its respective first sample-image feature, and each positive sample image is inputted into the second feature extraction network to obtain its respective second sample-image feature. Each negative sample image is inputted into the first feature extraction network to obtain its respective third sample-image feature, and each negative sample image is inputted into the second feature extraction network to obtain its respective fourth sample-image feature. When similarity between the first sample-image features and the second sample-images is greater than a third threshold and similarity between the third sample-image features and the fourth sample-image features is smaller than a fourth threshold, the comparison result is determined to meet the convergence condition.

Here the K positive sample images displaying the normal object and the K negative sample images displaying the defective object are obtained to obtain the K pairs of sample images, K being a natural number greater than 1. The negative sample images are generated through adjusting the positive sample images, respectively. Then, the initial version of the defect recognizing network is trained using the K pairs of sample images, until the comparison result between the output feature of the second feature extraction network and the output feature of the first feature extraction network meets the convergence condition. In other words, the defect recognizing network is trained through rich sample data, which improves precision of the defect recognizing network. Accuracy of a result of the image recognition is improved for the first object.

In all embodiments of the present disclosure, training the initial version of the defect recognizing network using the K pairs of sample images, until the result of the comparison between the output feature of the second feature extraction network and the output feature of the first feature extraction network meets the convergence condition may comprise following operations.

A current pair of sample images from the K pairs of sample images.

S1: Input the positive sample image in the current pair of sample images into the first feature extraction network to obtain a current positive sample-image feature and input the negative sample image in the current pair of sample images into the second feature extraction network to obtain a current negative sample-image feature.

S2: When similarity between the current negative sample-image feature and the current positive sample-image feature being smaller than a third threshold, obtain a next pair of sample images from the K pairs of sample images as a new current pair.

S3: When the similarity between the current negative sample-image feature and the current positive sample-image feature being greater than or equal to the third threshold, increase a convergence indicator by one.

S4: When the convergence indicator reaches a fourth threshold, determine that the convergence condition is met.

In all embodiments of the present disclosure, the initial version of the first feature extraction network and the initial version of the second feature extraction network use the same network structure, which may be but is not limited to: a deep convolutional neural network structure (for example, Residual Network-50 (ResNet-50)), a convolutional neural network model (for example, Vision Transformer (ViT)), a deep convolutional neural network model (for example, Visual Geometry Group 16 (VGG-16)) pre-trained model, or the like.

In all embodiments of the present disclosure, the convergence indicator is a result of counting a quantity of positive determinations regarding whether the similarity between the current negative sample-image feature and the current positive sample-image feature is greater than or equal to the third threshold. When the quantity of positive determinations reaches the fourth threshold, it is determined that the defect recognizing network is reliable enough and the training is terminated.

In all embodiments of the present disclosure, before the operation S1, the method may include but is not limited to following operations. The positive sample image in the current pair of sample images is divided into N positive-sample image blocks, and the negative sample image in the current pair of sample images is divided into N negative-sample image blocks. The manner of division may refer to the foregoing embodiment related to division on the first image. Details are not repeated herein

Correspondingly, the operation S1 may comprise but is not limited to following operations. The N

31      **EP 4 745 878 A1**      32

positive-sample image blocks are inputted into the first feature extraction network, and the N negative-sample image blocks are inputted into the second feature extraction network, N being a positive integer.

Correspondingly, operations S3 and S4 may comprise but are not limited to following operations. When for each positive-sample image block, similarity between an image feature, which is obtained through inputting such positive-sample image block into the first feature extraction network, and an image feature, which is obtained through inputting the negative-sample image block corresponding (e.g., located at the same position or displaying the same key portion) to such positive-sample image block, is greater than or equal to the third threshold, the convergence indicator is increased by one. When the convergence indicator reaches the fourth threshold, determine that the convergence condition is met.

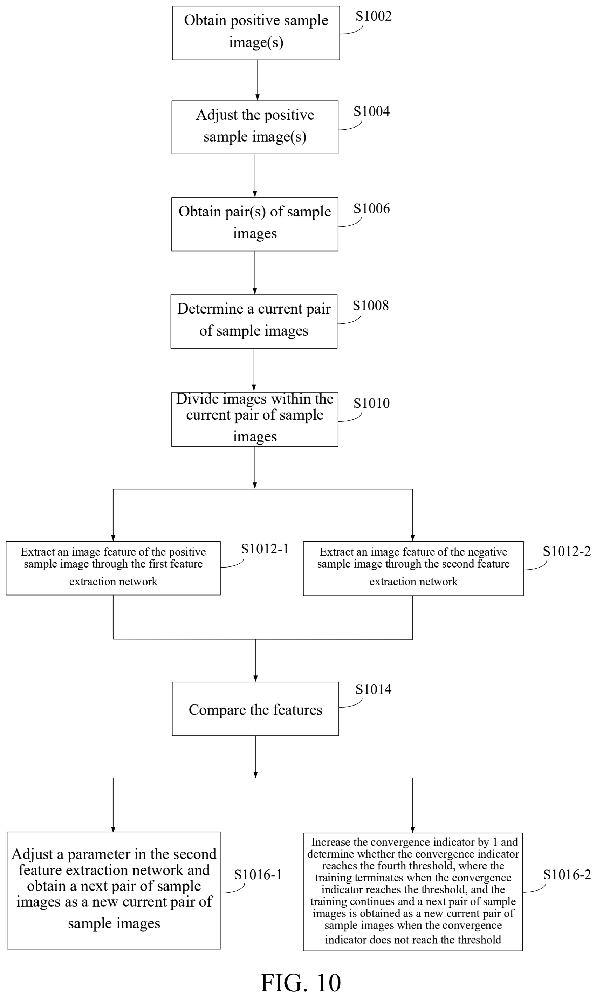

As an example, the method may comprise following operations, as shown in FIG. 10.

S1002: Obtain positive sample image(s).

For example, K positive sample images displaying the normal object(s) are obtained.

S1004: Adjust the positive sample image(s).

For example, a pose of the object in each of the K positive sample images is adjusted.

S1006: Obtain pair(s) of sample images.

For example, the K positive sample images are adjusted to generate the K negative sample images, respectively, displaying the defective object(s). K pairs of sample images are thus generated, where each pair of sample images comprises one positive sample image and one negative sample image that is generated on a basis of the positive sample image.

S1008: Determine a current pair of sample images.

For example, the $i^{th}$ pair of sample images in the K pairs of sample images is determined to serve as the current pair of sample images, i being a positive integer smaller than K.

S1010: Divide images within the current pair of sample images.

For example, the positive sample image in the current pair of sample images is divided into N positive-sample image blocks, and the negative sample image in the current pair of sample images is divided into N negative-sample image blocks, which correspond to the N positive-sample image blocks, respectively. For example, the N positive-sample image blocks in the positive sample image are blocks displaying the cap and the block displaying the thread, the N negative-sample image blocks in the negative sample image are also blocks displaying the cap and the block displaying the thread.

S1012-1: Extract an image feature of the positive sample image through the first feature extraction network.

For example, the N positive-sample image blocks are sequentially inputted into the first feature extraction network to obtain N positive-sample image block features.

S1012-2: Extract an image feature of the negative sample image through the second feature extraction network.

For example, the N negative-sample image blocks are sequentially inputted into the second feature extraction network to obtain N negative-sample image block features.

S1014: Compare the features.

For example, the similarity between each pair of the positive-sample image block feature and the negative-sample image block feature that correspond to each other are obtained.

After the N positive-sample image block features are compared with the N negative-sample image block features, respectively, it is determined that there is any pair of the positive-sample image block feature and the negative-sample image block feature having similarity smaller than the third threshold. In case of positive determination, the process proceeds to S1016-1: adjust a parameter in the second feature extraction network and obtain a next pair of sample images as a new current pair of sample images.

Otherwise, a result of comparison may be that similarity of all of the N pairs of the positive-sample image block feature and the N negative-sample image block feature are greater than or equal to the third threshold. In this case, the process proceeds to S1016-2: increase the convergence indicator by 1 and determine whether the convergence indicator reaches the fourth threshold. The training terminates when the convergence indicator reaches the threshold. The training continues, and a next pair of sample images is obtained as a new current pair of sample images, when the convergence indicator does not reach the threshold.

Here the current pair of sample images is obtained from the K pairs of sample images, and the following operations are performed. The positive sample image in the current pair of sample images is input into the first feature extraction network to obtain the current positive sample-image feature, and the negative sample image in the current pair of sample images is input into the second feature extraction network to obtain the current negative sample-image feature. When similarity between the current negative sample-image feature and the current positive sample-image feature being smaller than the third threshold, the next pair of sample images is obtained from the K pairs of sample images as the new current pair. When similarity between the current negative sample-image feature and the current positive sample-image feature being greater than or equal to the third threshold, the convergence indicator is increased by one, and the convergence condition is determined to be met when the convergence indicator reaches a fourth threshold. It is ensured that the image feature extracted by the first feature extraction network from an image displaying the normal object is the same as the image feature extracted by the second feature extraction network from

17

the image displaying the normal object, and the image feature extracted by the first feature extraction network from an image displaying the defective object is different from the image feature extracted by the second feature extraction network from the image displaying the defective object. The recognition result of the first image is more accurate, and t accuracy of the image recognition is improved for an industrial part.

In all embodiments of the present disclosure, constructing the K pairs of sample images may comprise following operations.

S1: Obtain the K positive sample images of the K pairs of sample images.

S2: Adjust the K positive sample images to obtain the K negative sample images, respectively. Each of the K positive sample images is a template sample image, and the template sample image displays the object not having the defect.

In all embodiments of the present disclosure, adjusting the K positive sample images to obtain the K negative sample images, respectively, comprises one of the following options.

In a first option, white noise is added into each positive sample image to generate the respective negative sample image.

In a second option, multiple defect image blocks are obtained, where each of the defect image blocks displays the defect, and each positive sample image is superimposed with one or more defect image blocks in the multiple defect image blocks to generate the respective negative sample image.

In a third option, each positive sample image is inputted into an defect generation network to obtain the respective negative sample image, where the defect generation network is a network trained using history positive sample images and defect image blocks, the defect generation network is configured for generating an image of the first object having the defect, and each of the defect image blocks displays the defect.

Here the K positive sample images displaying the normal object are obtained. Then, the K positive sample images are adjusted to generate the K negative sample images, where the positive sample images are template sample images displaying the normal object. In other words, rich negative sample images are obtained through the K positive sample images, so that the second feature extraction network trained using the rich negative sample images has good robustness. Thereby, accuracy of the image recognition manner is improved for the industrial part.

In all embodiments of the present disclosure, adjusting the K positive sample images to obtain the K negative sample images, respectively, may comprise one of the following operations S1 to S3.

S1: Add white noise into each positive sample image to generate the respective negative sample image.

In all embodiments of the present disclosure, operation S1 may comprise but is not limited to, a following operation. Gaussian noise is added into each positive sample image to generate the respective negative sample image.

S2: Obtain a plurality of defect image blocks, where each of the defect image blocks displays the defect, and superimpose each positive sample image with one or more defect image blocks in the plurality of defect image blocks to generate the respective negative sample image.

After the superimposition, the method may further comprise harmonizing the positive sample images and the defect image block(s) that are superimposed.

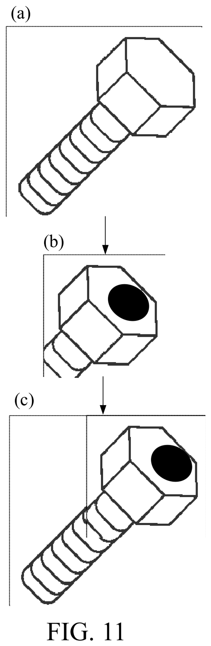

As an example, the positive sample image is an image of a screw as shown in subfigure (a) in FIG. 11. The defect image block may, but is not limited to, display a defect often occurs at a certain part of the screw. As shown in subfigure (b) in FIG. 11, the defect image block displays the defect in the cap or the defective cap. The positive-sample image block superimposed with the defect image block may be, but is not limited to, as shown in subfigure (c) in FIG. 11. The image block of the defective cap covers the original cap of the screw in the positive sample image.

S3: Input each positive sample image into an defect generation network to obtain the respective negative sample image, where the defect generation network is a network trained using history positive sample images and defect image blocks, the defect generation network is configured for generating an image of the first object having the defect, and each of the defect image blocks displays the defect.

Before inputting the positive sample images into the defect generation network to obtain the negative sample images, the method may comprise but is not limited to following operations. The positive sample images and the defect image block(s) are obtained, the initial version of the defect generation network is iteratively trained using the positive sample images and the defect image block(s), and a parameter of the defect generation network is iteratively adjusted, until the negative sample image of the object can be output by the defect generation network when the positive sample image and the defect image block(s) are inputted into the defect generation network.

Further, inputting the positive sample images into the defect generation network to obtain the negative sample images may comprise but is not limited to a following operation. Each positive sample image and the defect image block(s) are input into the defect generation network to obtain the respective negative sample image.

Herein the white noise is added into the positive sample images to generate the negative sample images. Alternatively, the multiple defect image blocks are obtained, where each of the defect image blocks displays the defect, and each positive sample image is superimposed with the one or more defect image blocks in the multiple defect image blocks to generate the respective negative sample image. Alternatively, each positive sample image is inputted into an defect generation network to obtain the respective negative sample image, where the defect generation network is a network trained using history positive sample images and defect image blocks, the defect generation network is configured for generating an image of the first object having the defect, and each of the defect image blocks displays the defect. In other words, rich negative sample images can be obtained through the K positive sample images displaying the normal object, so that the second feature extraction network trained using the rich negative sample images has good robustness. Accuracy of the image recognition manner is improved for the industrial part.

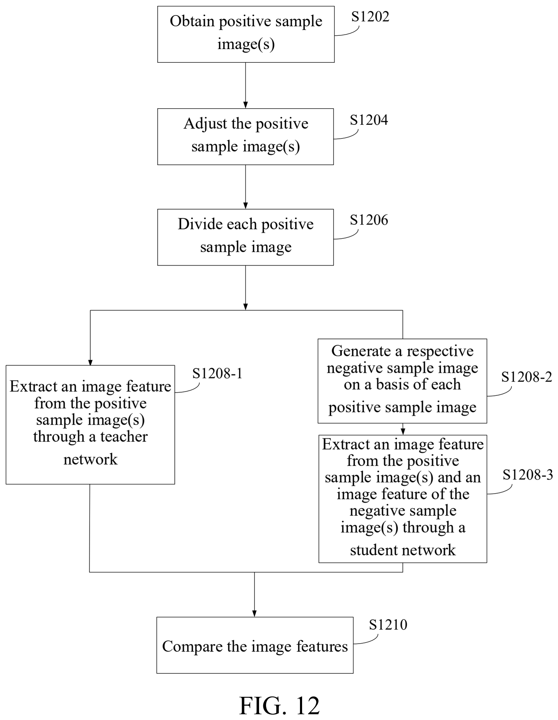

As an example, training on the defect recognizing network comprises following operations as shown in FIG. 12.

S1202: Obtain positive sample image(s).

S1204: Adjust the positive sample image(s) via an image alignment module.

S1206: Divide each positive sample image via a block division module.

S1208-1: Extract an image feature from the positive sample image(s) through a teacher network in a learning module.

S1208-2: Generate a respective negative sample image on a basis of each positive sample image via a negative-sample image block module.

S1208-3: Extract an image feature from the positive sample image(s) and an image feature of the negative sample image(s) through a student network in the learning module.

S1210: Compare, via a feature comparison module, the image feature of the positive sample image(s) extracted by the teacher network, the image feature of the positive sample image(s) extracted by the student network, and the image feature of the negative sample image(s) extracted by the student network.

Here the training terminates when: a loss between the image feature of the positive sample image(s) extracted by the teacher network and the image feature of the positive sample image(s) extracted by the student network is smaller than a predetermined threshold, and a loss between the image feature of the positive sample image(s) extracted by the teacher network and the image feature of the negative sample image(s) extracted by the student network is smaller than such or another predetermined threshold. Otherwise, a parameter of the student network is adjusted, and S1202 to S1210 are repeated, until: the loss between the image feature of the positive sample image(s) extracted by the teacher network and the image feature of the positive sample image(s) extracted by the student network is smaller than the predetermined threshold, and the loss between the image feature of the positive sample image(s) extracted by the teacher network and the image feature of the negative sample image(s) extracted by the student network is smaller than such or the other predetermined threshold.

The teacher network may be the first feature extraction network as described above, and the student network may be the second feature extraction network as described above. Here the defect recognizing network is trained through rich sample data, which improved precision of the defect recognizing networks. Accuracy of the image recognition manner is improved for the industrial part.

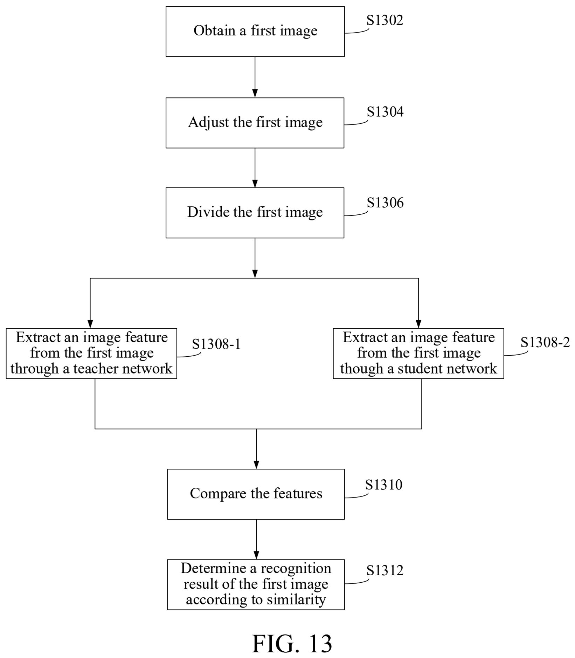

As an example, application of the defect recognizing network may comprise following operations, as shown in FIG. 13.

S1302: Obtain a first image.

S1304: Adjust the first image via an image alignment module.

S1306: Divide the first image through a block division module.

S1308-1: Extract an image feature from the first image through a teacher network in a learning module.

S1308-2: Extract an image feature from the first image though a student network in the learning module.

S1310: Compare, by a feature comparison module, the image feature extracted through the teacher network and the image feature extracted through the student network to obtain similarity between the two features.

S1312: Determine a recognition result of the first image according to the similarity.

In an embodiment, when a loss between the image feature extracted through the teacher network from the first image and the image feature extracted from the first image through the student network is smaller than a predetermined threshold, it is determined that the recognition result indicates a first object in the first image does not have the defect. When the loss is greater than or equal to the predetermined threshold, it is determined that the recognition result indicates that the first object has the defect.

The teacher network may be the above-mentioned first feature extraction network, and the student network may be the above-mentioned second feature extraction network. Here whether the first object has the defect is determined according to the similarity between features, and the features are extracted respectively from branch networks (i.e., the first feature extraction network and the second feature extraction network) in the defect recognizing network for the first image displaying the first object. Hence, the recognition result of the first image is not determined solely according to similarity between an image feature of an image displaying the first object and an image feature of an image displaying a normal object. Addressed is the technical issue of inaccurate result of recognizing an industrial part in an image in related art. A technical effect of improving accuracy of image recognition on an industrial part is achieved.

In all embodiments of the present disclosure, the above modules used in the method for image recognition may be configured as follows.

**(1) Image alignment module**

The image alignment module needs to capture a group of template images. A manner of capturing may be photographing a gold sample (a sample which has been determined to be normal through detection and has no defect). This sample is photographed from all candidate view angles for the subsequent detection, and the captured group of images are called the template images. An objective of the image alignment is to adjust the input image (i.e., the first image), so that a pose of the object in the input image is completely aligned with that in a template image. Thereby, an image block of a specific region can be accurately extracted from the input image. For example, a position and an angle of the object in the first image and those in the template image are quite different, and thus a transform matrix T between the template image and the first image may be calculated through the image alignment module. The first image may be adjusted by applying the transform matrix T to it, such that the position and the angle of object in the registered first image are substantially the same as those of the template image. Subsequently, a corresponding image block in the first image may be obtained through cropping the first image according to a cropping box preset for the template image.

In all embodiments of the present disclosure, an algorithm utilized by the image alignment module may be a minimum error iteration method, where an error (loss) function is constructed, and network parameters(s) are selected as to-be-optimized parameter(s). These parameter(s) are optimized iteratively to reduce the error (loss) gradually. As an example, edge detection is performed on the first image and the template image to obtain respective edge images from the first image and the template image. Then, each edge image is divided into partitions, and the NMS operation is performed in each partition in parallel, such that the edge images are converted into respective sets of edge points (represented by 2D coordinates). An average error of pairs of the corresponding points between two sets is calculated through an error (loss) function, which may be:

$$F = \sum_{k=1}^{K} \frac{\|p_k - p_k^t\|}{K} \quad (5)$$

F is the error function, K is a quantity of edge points in the template image, and $p_k$ is coordinates of a $k^{th}$ edge point in the first image, and $p_k^t$ is coordinates of a $k^{th}$ edge point in the template image. After the error function is determined, an estimated transform matrix of a current iteration (which is a unit matrix before the iterations start) is applied to the set of edge points in the first image, the mapping between edge points of the first image and the edge points of the template image is established through nearest neighbor search, pair(s) of the mapping edge point having an excessively large difference in coordinates are discarded, and a new transform matrix for a next iteration is generated through RANSAC based on the differences between all pairs of the mapping edge points. The above operating cycle repeats until the error (loss) converges.

**(2) Block division module:**

One of the objectives of the image block division module is to narrow a receptive field for detection on a single defect. In practice, many defects are small and slight. If an entire image is inputted into a defect detection network, most regions in the image are normal regions, and defect(s) occupy only a very small part, and hence the detection is rather difficult. If the image is first divided into blocks and then subject to detection, the detection difficulty is reduced since the area of the defective region is usually larger than that of the image blocks. Another objective of the image block division module is to locate a position of the defect. If an entire image is inputted into an abnormality detection network for detection, even if the input image is determined to be of the defective object, it is difficult to locate a position of the defect. If the image is first divided into blocks and then subject to detection, the entire image is determined to be of the defective object as long as any image block is determined to have at least a part of the defect, and a position of the image block in the image is the position of the defect.

In all embodiments of the present disclosure, an image may but is not limited to be directly divided into 28×28 image blocks of the same size. The uniform divisional has high universality, and any detection task can utilize such division. As an alternative solution, the division manner may be customized according to the division template. After being adjusted on a basis of the template image, the first image may be divided according to the division manner set by a user, and the partitions may follow have stronger semantic characteristics.

**(3) Defect block generating module:**

An objective of the defect block generating module is to improve robustness of a student network to the defect. In all embodiments of the present disclosure, a defect block (also called defect image block or defective image block) may be generated through the following manners, which improves diversity of the defect in the defect blocks:

In a first manner, white noise is added. In an embodiment, the defect block may be obtained by adding some random white noise into a normal image block. A range of a size and/or a position of noise may be configured. Different random white noises may be added to simulate defects of various degrees and various sizes.

In a second manner, a defective block is pasted on the image. As an example, an image of a defect is extracted through software from an image of the defective object, and the image of the defect is pasted onto a normal image block. The normal image block with the image of the defect is harmonized to obtain the defect block.

In a third manner, a defect block is generated through a network. As an example, a lightweight image processing network (e.g., Inpainting network) is constructed and trained using existing normal image(s) and existing defect images. When a normal image and a defect image are inputted into the trained Inpainting network, the defect block is output.

(4) Feature learning module:

In all embodiments of the present disclosure, network structures and initial parameters are identical between a student network and a teacher network, and the two networks may be a pre-trained ResNet-50 network. In a learning process, the parameter of the teacher network is fixed, and the parameter of the student network is adjustable. As an example, the same normal image block is inputted into the student network and the teacher network, and output features thereof are controlled as similar as possible through adjusting the student network. That is, an objective is to make the student network and the teacher network output similar features when the input is the same normal image block during the recognition stage. Besides inputting the normal image block into the teacher network, the defect block generated on a basis of the normal image block is further input into the student network, and the two output features are also controlled as similar as possible through adjusting the student network. That is, another objective is that when the input is the same defect block, the teacher network outputs a feature of the defect block , and the student network outputs a feature of the normal image block due to its robustness against the defect during the recognition stage. In other works, the teacher network and the student network output features with low similarity in this case.

In all embodiments of the present disclosure, a loss function utilized by the feature learning module may be normalized L2 loss function and ranges from 0 to 1. The larger the similarity between two features is, the smaller the loss is outputted by the loss function.

(5) Feature comparison module:

The feature comparison module is configured for determination in the recognition stage. When the first image is inputted, features outputted by a teacher network and a student network of the first image are separately calculated, and then the L2 loss between the two features is calculated. If a value of the loss is smaller than 0.5, it is determined that similarity between the two features is high and the first image is an image of the normal object. If the value of the loss is greater than 0.5, it is determined that the similarity between the two features is low and the first image is an image of the defective object, and a position of the defect is a position of the defect block.

For the foregoing method embodiments, for brief description, all method embodiments are described as a series of action combinations. A person of ordinary skill in the art needs to note that the present disclosure is not limited by the described action sequence. Because in accordance with the present disclosure, operations may be performed in other orders or simultaneously. In addition, a person of ordinary skill in the art needs to note that embodiments described in the specification are all preferred embodiments, and the involved action and module are not necessarily required for the present disclosure.

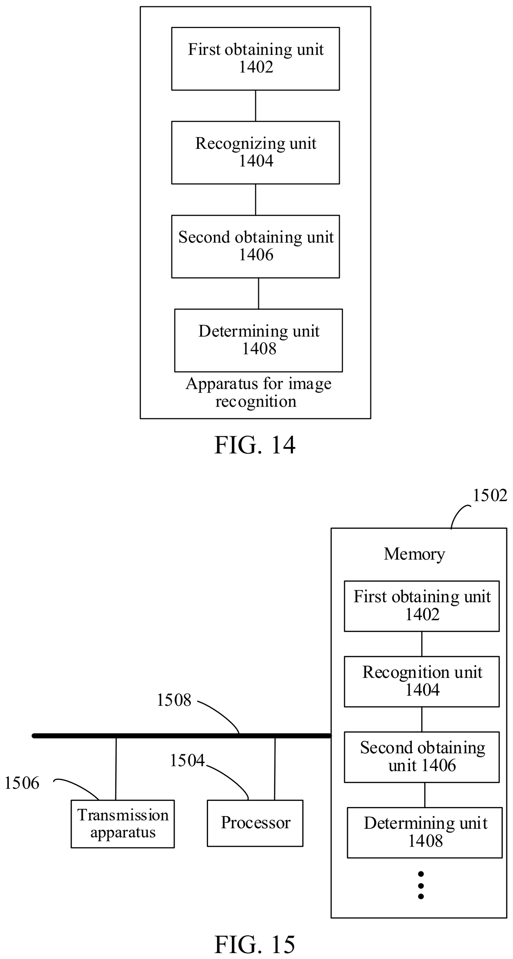

According to another aspect of the embodiments of the present disclosure, an apparatus for image recognition for implementing the method for image recognition is further provided. As shown in FIG. 14, the apparatus comprises a first obtaining unit 1402, a recognizing unit 1404, a second obtaining unit 1406, and a determining unit 1408.

The first obtaining unit 1402 is configured for obtaining a first image, wherein the first image is a captured image of a first object, and the first object is an object that is to be detected.

The recognition unit 1404 is configured for extracting an image feature of the first image through a defect recognizing network, where: the defect recognizing network comprises a siamese neural network; the image feature comprises a first image feature extracted from the first image through a first feature extraction network in the siamese neural network and a second image feature extracted from the first image through a second feature extraction network in the siamese neural network; the first feature extraction network is a network trained using a positive sample image in a pair of sample images, and the second feature extraction network is a network trained using the first feature extraction network as a reference network and using a negative sample image in the pair of sample images; and the positive sample image is an image of the object which does not have the defect, the negative sample image is an image of the object which has the defect, and the negative sample image is synthesized from the positive sample image.

The second obtaining unit 1406 is configured for obtaining a similarity between the first image feature and the second image feature.

The determining unit 1408 is configured for determining a recognition result of the first image according to the similarity, wherein the recognition result indicates whether the first object in the first image has the defect.

In all embodiments of the present disclosure, the determining unit comprises a first determining module and a second determining module.

The first determining module is configured for: in response to the similarity being smaller than or equal to a first threshold, determining that the first image belongs to a first type, where the first type indicates that the first object has the defect.

The second determining module is configured for: in response to the similarity being larger than or equal to a second threshold, determining that the first image belongs to a second type, where the second type indicates that the first object does not have the defect, and the first threshold is smaller than the second threshold.

In all embodiments of the present disclosure, the apparatus may further comprise a third obtaining unit and an adjusting unit.

The third obtaining unit is configured for obtaining a template image for the first object, where the template image is an image of a reference object, and the reference object is the object which does not have the defect.

The adjusting unit is configured for adjusting the first image according to a pose of the reference object in the template image to obtain an adjusted first image, where a pose of the first object in the adjusted first image is aligned with a pose of the reference object in the template image.

In all embodiments of the present disclosure, the adjusting unit may comprise a detecting module, a converting module, a third determining unit, and an adjusting module.

The detecting module is configured for determining an edge of the reference object in the template image through edge detection to obtain a first edge image and determining an edge of the first object in the first image through edge detection to obtain a second edge image.

The converting module is configured for obtaining a first set of points representing the edge of the reference object from the first edge image and obtaining a second set of points representing the edge of the first object from the second edge image.

The third determining unit is configured for determining a transform matrix according to a mapping relationship between the points in the first set and the points in the second set, where each point in the second set is mapped to a respective point in the first set.

The adjusting module is configured for adjusting positions of the points in the second set using the transform matrix to obtain a third set of points representing the edge of the first object in the adjusted first image, where the position of each point in the second set is adjusted according to the transform matrix to obtain the position of a respective point in the third set, and the respective point in the third set is determined to correspond to the point, which is mapped to said point in the second set, in the first set.

In all embodiments of the present disclosure, the third determining module may be further configured for determining a current transform matrix for a current iteration; adjusting positions of points in the second set using the current transform matrix to obtain a reference set of points representing a transformed edge of the first object, where the position of each point in the second set is adjusted according to the transform matrix to obtain the position of a respective point in the reference set, and the respective point in the reference set is determined to correspond to the point, which is mapped to said point in the second set, in the first set; determining a difference between a position of each point in the reference set and a position of a respective point, which corresponds to said point in the reference set, in the first set to obtain a respective difference; and determining a transform error between the points in the reference set and the points in the first set according to the determined differences; where the current transform matrix is determined to serve as the transform matrix when the transform error meets a convergence condition.

In all embodiments of the present disclosure, the recognizing unit may comprise a dividing module and an extracting module.

The dividing module is configured for dividing the first image into N first image blocks, N being a positive integer greater than 1.

The extracting module is configured for extracting a respective feature of each of the N first image blocks through the defect recognizing network to obtain the image feature.

In all embodiments of the present disclosure, the division module may be further configured for: dividing the first image into N image blocks, where a size of each of the N image blocks is equal to a preset size, and the N image blocks serve as the N first image blocks; and/or cropping the first image to obtain N image blocks from the first image, where a respective key portion of the first object is displayed in each of the N image blocks, and the N image blocks serve as the N first image blocks.

In all embodiments of the present disclosure, the extraction module may be further configured for: for each of the N first image blocks, determining said first image block to serve as a current image block; inputting the current image block into the first feature extraction network to obtain a first current sub-image feature; and inputting the current image block into the second feature extraction network to obtain a second current sub-image feature; where the first image feature comprises the first current sub-image feature of each first image block, and the second image feature comprises the second current sub-image feature of each first image block.

In all embodiments of the present disclosure, the apparatus may further comprise a fourth obtaining unit and a training unit.

The fourth obtaining unit is configured for constructing K pairs of sample images, where each of the K pairs of sample images comprises a respective positive sample image displaying the object not having the defect and a respective negative sample image displaying the object having the defect, the negative sample image is obtained by adjusting the positive sample image, and K is an integer number greater than 1.

The training unit is configured for training an initial version of the defect recognizing network using the K pairs of sample images, until a result of comparison between an output feature of the second feature extraction network and an output feature of the first feature extraction network meets a convergence condition.

In all embodiments of the present disclosure, the training unit may be further configured for: obtaining a current pair of sample images from the K pairs of sample images; inputting the positive sample image in the current pair of sample images into the first feature extraction network to obtain a current positive sample-image feature; inputting the negative sample image in the current pair of sample images into the second feature extraction network to obtain a current negative sample-image feature; in response to similarity between the current negative sample-image feature and the current positive sample-image feature being smaller than a third threshold, obtaining a next pair of sample images from the K pairs of sample images as a new current pair; and in response to similarity between the current negative sample-image feature and the current positive sample-image feature being greater than or equal to the third threshold, increasing a convergence indicator by one; and where the convergence condition is determined to be met when the convergence indicator reaches a fourth threshold.

In all embodiments of the present disclosure, the fourth obtaining unit may comprise an obtaining module and an adjusting module.

The obtaining module is configured for obtaining the K positive sample images of the K pairs of sample images.

The adjusting module is configured for adjusting the K positive sample images to obtain the K negative sample images, respectively, wherein each of the K positive sample images is a template sample image, and the template sample image displays the object not having the defect.

In all embodiments of the present disclosure, the adjustment module may be further configured for: adding white noise into each positive sample image to generate the respective negative sample image; obtaining a plurality of defect image blocks, where each of the defect image blocks displays the defect, and superimposing each positive sample image with one or more defect image blocks in the plurality of defect image blocks to generate the respective negative sample image; and/or inputting each positive sample image into an defect generation network to obtain the respective negative sample image, where the defect generation network is a network trained using history positive sample images and defect image blocks, the defect generation network is configured for generating an image of the first object having the defect, and each of the defect image blocks displays the defect.

Specific embodiments may refer to the embodiments of the method for image recognition. Details are not described herein.

According to another aspect of the embodiments of the present disclosure, an electronic device configured to implement the method for image recognition is further provided. In all embodiments of the present disclosure, an example in which the electronic device is a terminal is used for illustrative description. As shown in FIG. 15, the electronic device includes a memory 1502 and a processor 1504. The memory 1502 has a computer program stored therein, and the processor 1504 is configured to perform operations in any of the foregoing method embodiments through the computer program.

In some exemplary embodiments, the electronic device may be located in at least one of a plurality of network devices of a computer network.

In some exemplary embodiments, the processor may be configured to perform the method for image recognition described in any one of the foregoing embodiments through the computer program.

In all embodiments of the present disclosure, a person of ordinary skill in the art may understand that the structure shown in FIG. 15 is merely an example, and the electronic device may alternatively be a terminal device such as a smartphone (such as an Android phone or an iOS phone), a tablet computer, a palmtop computer, a mobile internet device (MID), or a PAD. The structure of the foregoing electronic device is not limited in FIG. 15. For example, the electronic device may further include more or less components (for example, a network interface) than those shown in FIG. 15 or has a configuration different from that shown in FIG. 15.

The memory 1502 may be configured to store a software program and a module, such as program instructions/modules corresponding to the method for image recognition and apparatus in all embodiments of the present disclosure of the present disclosure. The processor 1504 runs the software program and the module stored in the memory 1502, to perform various function applications and data processing, that is, implement the method for image recognition. The memory 1502 may include a high-speed random memory, and may further include a non-volatile memory, such as one or more magnetic storage apparatuses, a flash memory, or another nonvolatile solid-state memory. In some examples, the memory 1502 may further include a memory remotely disposed relative to the processor 1504, and these remote memories may be connected to the terminal through the network. Examples of the foregoing network include, but are not limited to, the internet, the intranet, a local area network, a mobile communication network, and a combination thereof. The memory 1502 may be specifically configured to, but is not limited to, store a first image. In an example, as shown in FIG. 15, the memory 1502 may include, but is not limited to, the first obtaining unit 1402, the recognition unit 1404, the second obtaining unit 1406, and the determining unit 1408 in the apparatus for image recognition. In addition, the memory 1502 may further include, but is not limited to, other modules and units in the apparatus for image recognition. Details are not described in this example.

In all embodiments of the present disclosure, a transmission apparatus 1506 is configured to receive or transmit data through a network. Specific examples of the network may include a wired network and a wireless network. In an example, the transmission apparatus 1506 includes a network interface controller (NIC). The NIC may be connected to another network device and a router through a network cable, to communicate with the internet or the local area network. In an example, the transmission apparatus 1506 is a radio frequency (RF) module and is configured to communicate with the internet in a wireless manner.

In addition, the electronic device further includes a connection bus 1508 is configured to connect various modules and components in the electronic device.

In other embodiments, the terminal device or the server may be a node in a distributed system. The distributed system may be a blockchain system, and the blockchain system may be a distributed system formed by connecting a plurality of nodes in a form of network communication. A peer-to-peer network may be formed between the nodes. A computing device in any form, for example, an electronic device such as a server or a terminal, may become a node in the blockchain system by joining in with the peer-to-peer network.

According to one aspect of the present disclosure, a computer program product is provided. The computer program product includes a computer program. The computer program includes program code configured for performing the method. In such an embodiment, the computer program may be downloaded and installed from a network through a communication part, and/or installed from a removable medium. When the computer program is executed by a central processing unit, various functions provided in all embodiments of the present disclosure of the present disclosure are performed.

According to one aspect of the present disclosure, a computer-readable storage medium is provided. A processor of a computer device reads a computer program from the computer-readable storage medium. The processor executes the computer program, to enable the computer device to implement the method.

In some exemplary embodiments, the computer-readable storage medium may be configured to store a computer program configured for performing the method for image recognition in any one of the foregoing embodiments.

In some exemplary embodiments, a person of ordinary skill in the art may understand that all or some of the operations to the embodiments may be by a program instructing relevant hardware of a terminal device. The program may be stored in using a computer-readable storage medium. The storage medium may include a flash disk, a read-only memory (ROM), a random-access memory (RAM, magnetic disk, an optical disk, or the like.

When the integrated unit in the foregoing embodiment is implemented in the form of a software function unit and sold or used as an independent product, the integrated unit may be stored in the foregoing computer-readable storage medium. According to such an understanding, the technical solutions of the present disclosure are essential, or the part contributing to the related art, or all or a part of the technical solutions may be implemented in the form of a software product. The computer software product is stored in a storage medium and includes several instructions for instructing a computer device (which may be a personal computer, a server, or a network device) to perform all or some of the operations in the methods described in all embodiments of the present disclosure of the present disclosure.

In the foregoing embodiments of the present disclosure, the descriptions of each embodiment have different focuses. A part that is not described in detail in an embodiment may refer to the relevant descriptions of other embodiments.

In several embodiments provided in the present disclosure, a disclosed client may be implemented in other manners. For example, the described apparatus embodiment is merely an example. For example, the unit division is merely logical function division and may be another division during actual implementation. For example, a plurality of units or components may be merged or integrated into another system, or some features may be ignored or not performed. In addition, the displayed or discussed mutual couplings or direct couplings or communication connections may be implemented by some interfaces; indirect couplings or communication connections between units or modules which may be electric or in other forms.

The units described as separate components may or may not be physically separate, and components displayed as units may or may not be physical units, may be located in one place, or may be distributed on a plurality of network units. Some or all of the units can be selected according to actual needs to achieve the objectives of the solution in the embodiment.

In addition, functional units in all embodiments of the present disclosure of the present disclosure may be integrated into one processing unit, or each of the units may exist alone physically, or two or more units are integrated into one unit. The integrated unit may be implemented in a form of hardware or may be implemented in a form of a functional software unit.

The foregoing is merely a preferred implementation of the embodiments of the present disclosure. A person of ordinary skill in the art can further make several improvements and refinements without departing from the principle of the present disclosure, and the improvements and refinements a shall fall within the protection scope of the present disclosure.

## Claims

1. A method for image recognition, applicable to an electronic device, wherein the method comprises:

   obtaining a first image of a first object;
   extracting an image feature of the first image through a defect recognizing network, wherein:

   the defect recognizing network comprises a siamese neural network;
   the image feature comprises: a first image feature extracted from the first image through a first feature extraction network in the siamese neural network, and a second image feature extracted from the first image through a second feature extraction network in the siamese neural network;
   the first feature extraction network is a network trained using a positive sample image in a pair of sample images, and the second feature extraction network is a network trained using the first feature extraction network as a reference network and using a negative sample image in the pair of sample images; and
   the positive sample image is an image of the object which does not have the defect, the negative sample image is an image of the object which has the defect, and the negative sample image is synthesized from the positive sample image;

   obtaining a similarity between the first image feature and the second image feature; and
   determining a recognition result of the first image according to the similarity, wherein the recognition result indicates whether the first object in the first image has the defect.

2. The method according to claim 1, wherein determining the recognition result of the first image according to the similarity comprises:

   in response to the similarity being smaller than or equal to a first threshold, determining that the first image belongs to a first type, wherein the first type indicates that the first object has the defect; and
   in response to the similarity being larger than or equal to a second threshold, determining that the first image belongs to a second type, wherein the second type indicates that the first object does not have the defect, and the first threshold is smaller than the second threshold.

3. The method according to claim 1 or 2, wherein after obtaining the first image, the method further comprises:

   obtaining a template image for the first object, wherein the template image is an image of a reference object, and the reference object is the object which does not have the defect; and
   adjusting the first image according to a pose of the reference object in the template image to obtain an adjusted first image, wherein a pose of the first object in the adjusted first image is aligned with a pose of the reference object in the template image.

4. The method according to claim 3, wherein adjusting the first image according to the pose of the reference object in the template image to obtain the adjusted first image comprises:

   determining an edge of the reference object in the template image through edge detection to obtain a first edge image;
   determining an edge of the first object in the first image through edge detection to obtain a second edge image;
   obtaining a first set of points representing the edge of the reference object from the first edge image;
   obtaining a second set of points representing the edge of the first object from the second edge image;
   determining a transform matrix according to a mapping relationship between the points in the first set and the points in the second set, wherein each point in the second set is mapped to a respective point in the first set; and
   adjusting positions of the points in the second set using the transform matrix to obtain a third set of points representing the edge of the first object in the adjusted first image, wherein the position of each point in the second set is adjusted according to the transform matrix to obtain the position of a respective point in the third set, and the respective point in the third set is determined to correspond to the point, which is mapped to said point in the second set, in the first set.

5. The method according to claim 4, wherein determining the transform matrix according to the mapping relationship between the points in the first set and the points in the second set comprises:

   determining a current transform matrix for a current iteration;
   adjusting positions of points in the second set using the current transform matrix to obtain a reference set of points representing a transformed edge of the first object, wherein the position of each point in the second set is adjusted according to the transform matrix to obtain the position of a respective point in the reference set, and the respective point in the reference set is determined to correspond to the point, which is mapped to said point in the second set, in the first set;

determining a difference between a position of each point in the reference set and a position of a respective point, which corresponds to said point in the reference set, in the first set to obtain a respective difference; and

determining a transform error between the points in the reference set and the points in the first set according to the determined differences;

wherein the current transform matrix is determined to serve as the transform matrix when the transform error meets a convergence condition.

6. The method according to any one of claims 1 to 5, wherein extracting the image feature of the first image through the defect recognizing network comprises:

dividing the first image into N first image blocks, N being a positive integer greater than 1; and extracting a respective feature of each of the N first image blocks through the defect recognizing network to obtain the image feature.

7. The method according to claim 6, wherein dividing the first image into the N first image blocks comprises one of:

dividing the first image into N image blocks, wherein a size of each of the N image blocks is equal to a preset size, and the N image blocks serve as the N first image blocks; and cropping the first image to obtain N image blocks from the first image, wherein a respective key portion of the first object is displayed in each of the N image blocks, and the N image blocks serve as the N first image blocks.

8. The method according to claim 6 or 7, wherein extracting the respective feature of each of the N first image blocks through the defect recognizing network to obtain the image feature comprises, for each of the N first image blocks:

determining said first image block to serve as a current image block;
inputting the current image block into the first feature extraction network to obtain a first current sub-image feature; and
inputting the current image block into the second feature extraction network to obtain a second current sub-image feature;

wherein the first image feature comprises the first current sub-image feature of each first image block, and the second image feature comprises the second current sub-image feature of each first image block.

9. The method according to any one of claims 1 to 8, wherein before obtaining the first image, the method further comprises:

constructing K pairs of sample images, wherein each of the K pairs of sample images comprises a respective positive sample image displaying the object not having the defect and a respective negative sample image displaying the object having the defect, the negative sample image is obtained by adjusting the positive sample image, and K is an integer number greater than 1; and
training an initial version of the defect recognizing network using the K pairs of sample images, until a result of comparison between an output feature of the second feature extraction network and an output feature of the first feature extraction network meets a convergence condition.

10. The method according to claim 9, wherein training the initial version of the defect recognizing network using the K pairs of sample images, until the result of the comparison between the output feature of the second feature extraction network and the output feature of the first feature extraction network meets the convergence condition comprises:

obtaining a current pair of sample images from the K pairs of sample images;
inputting the positive sample image in the current pair of sample images into the first feature extraction network to obtain a current positive sample-image feature;
inputting the negative sample image in the current pair of sample images into the second feature extraction network to obtain a current negative sample-image feature;
in response to similarity between the current negative sample-image feature and the current positive sample-image feature being smaller than a third threshold, obtaining a next pair of sample images from the K pairs of sample images as a new current pair; and
in response to similarity between the current negative sample-image feature and the current positive sample-image feature being greater than or equal to the third threshold, increasing a convergence indicator by one; and
wherein the convergence condition is determined to be met when the convergence indicator reaches a fourth threshold.

11. The method according to claim 9 or 10, wherein constructing the K pairs of sample images comprises:

obtaining the K positive sample images of the K pairs of sample images; and
adjusting the K positive sample images to obtain the K negative sample images, respectively; wherein each of the K positive sample images is a template sample image, and the template sample image displays the object not having the defect.

12. The method according to claim 11, wherein adjusting the K positive sample images to obtain the K negative sample images, respectively, comprises one of:

adding white noise into each positive sample image to generate the respective negative sample image;
obtaining a plurality of defect image blocks, wherein each of the defect image blocks displays the defect, and superimposing each positive sample image with one or more defect image blocks in the plurality of defect image blocks to generate the respective negative sample image; or
inputting each positive sample image into an defect generation network to obtain the respective negative sample image, wherein the defect generation network is a network trained using history positive sample images and defect image blocks, the defect generation network is configured for generating an image of the first object having the defect, and each of the defect image blocks displays the defect.

13. An apparatus for image recognition, deployed on an electronic device, wherein the apparatus comprising:

a first obtaining unit, configured for obtaining a first image, wherein the first image is a captured image of a first object, and the first object is an object that is to be detected;
a recognizing unit, configured for extracting an image feature of the first image through a defect recognizing network, wherein:

the defect recognizing network comprises a siamese neural network;
the image feature comprises: a first image feature extracted from the first image through a first feature extraction network in the siamese neural network, and a second image feature extracted from the first image through a second feature extraction network in the siamese neural network;
the first feature extraction network is a network trained using a positive sample image in a pair of sample images, and the second feature extraction network is a network trained using the first feature extraction network as a reference network and using a negative sample image in the pair of sample images; and
the positive sample image is an image of the object which does not have the defect, the negative sample image is an image of the object which has the defect, and the negative sample image is synthesized from the positive sample image;

a second obtaining unit, configured for obtaining a similarity between the first image feature and the second image feature; and
a determining unit, configured for determining a recognition result of the first image according to the similarity, wherein the recognition result indicates whether the first object in the first image has the defect.

14. A computer-readable storage medium storing a program stored, wherein the program, when executed by a processor, implements the method according to any one of claims 1 to 12.

15. A computer program product, comprising a computer program, wherein the program, when executed by a processor, implements the method according to any one of claims 1 to 12.

16. An electronic device, comprising a memory and a processor, wherein the memory stores a computer program, and the processor is configured to execute the computer program to implement the method according to any one of claims 1 to 12.

**Database 114**

**Terminal device 102**

Display 108

Processor 106

Memory 104

S104: Transmit the first image

S112: Transmit the recognition result of the first image

Network 110

S104: Transmit the first image

S112: Transmit the recognition result of the first image

Store or read

Server 112

S102: Obtain a first image of a first object

S106: Extract an image feature of the first image through a defect recognizing network comprising a siamese neural network, image feature comprises a first image feature extracted from the first image through a first feature extraction network in the siamese neural network and a second image feature extracted from the first image through a second feature extraction network in the siamese neural network, the first feature extraction network is a network trained using a positive sample image in a pair of sample images, the second feature extraction network is a network trained using the first feature extraction network as a reference network and using a negative sample image in the pair of sample images, the positive sample image is an image of the object which does not have the defect, the negative sample image is an image of the object which has the defect, and the negative sample image is synthesized from the positive sample image

S108: Obtain a similarity between the first image feature and the second image feature

S110: Determine a recognition result of the first image according to the similarity. The recognition result indicates whether the first object in the first image has the defect

FIG. 1

Obtain a first image of a first object, where the first object is an object that is to be detected ⟶ S202

Extract an image feature of the first image through a defect recognizing network, where the defect recognizing network comprises a siamese neural network, the image feature comprises a first image feature, which is extracted from the first image through a first feature extraction network in the siamese neural network, and a second image feature, which is extracted from the first image through a second feature extraction network in the siamese neural network, the first feature extraction network is a network trained using a positive sample image in a pair of sample images, the second feature extraction network is a network trained using the first feature extraction network as a reference network and using a negative sample image in the pair of sample images, the positive sample image is an image of the object which does not have the defect, the negative sample image is an image of the object which has the defect, and the negative sample image is synthesized from the positive sample image ⟶ S204

Obtain a similarity between the first image feature and the second image feature ⟶ S206

Determine a recognition result of the first image according to the similarity, where the recognition result indicates whether the first object in the first image has the defect ⟶ S208

FIG. 2

Obtain a first image — S302

Defect recognizing network 302

Teacher network 304

First image feature extracted from the first image

Student network 306

Second image feature extracted from the first image

S304

Obtain a similarity between the first image feature and the second image feature — S306

Determine whether the similarity is greater than a predetermined threshold — S308

No

Determine that the first image belongs to a second type indicating a normal object — S310-2

Yes

Determine that the first image belongs to a first type indicating a defective object — S310-1

FIG. 3

(a)                                    (b)

First object

Reference
object

FIG. 4

FIG. 5

FIG. 6

S702 — Determine a current transform matrix, where the current transform matrix is a randomly generated matrix

S704 — Transform coordinates of the points in the second set according to the current transform matrix to obtain coordinates of the points in the reference set

S706 — Establish correspondence between all points in the reference point set and all points in the first set

S708 — Determine a difference between a position of each point in the reference set and a position of each point in the first set according to the correspondence

S710 — Determine a transform error between the reference set and the first set according to the differences

S712 — Determine whether the transform error meets a convergence condition

No

Yes

S714 — Determine the current transform matrix as the transform matrix, and the adjustment on the second set of points in the first image is completed

S716 — Adjust the current transformation matrix

S718 — Transform coordinates of the points in the second set according to the adjusted current transform matrix to obtain coordinates of the points in the reference set

S720 — Establish correspondence between all points in the reference point set and all points in the first set

S722 — Determine a difference between a position of each point in the reference set and a position of each point in the first set according to the correspondence

S724 — Determine a transform error between the reference set and the first set according to the differences

S726 — Determine whether the transform error meets a convergence condition

No

Yes

S728 — Determine the adjusted current transform matrix as the transform matrix, and the adjustment on the second set of points in the first image is completed

FIG. 7

(a)

(b)

FIG. 8

(a)

(b)

Image block in
which a cap is
located

Image block in
which a thread
is located

FIG. 9

Obtain positive sample image(s) — S1002

Adjust the positive sample image(s) — S1004

Obtain pair(s) of sample images — S1006

Determine a current pair of sample images — S1008

Divide images within the current pair of sample images — S1010

Extract an image feature of the positive sample image through the first feature extraction network — S1012-1

Extract an image feature of the negative sample image through the second feature extraction network — S1012-2

Compare the features — S1014

Adjust a parameter in the second feature extraction network and obtain a next pair of sample images as a new current pair of sample images — S1016-1

Increase the convergence indicator by 1 and determine whether the convergence indicator reaches the fourth threshold, where the training terminates when the convergence indicator reaches the threshold, and the training continues and a next pair of sample images is obtained as a new current pair of sample images when the convergence indicator does not reach the threshold — S1016-2

FIG. 10

(a)

(b)

(c)

FIG. 11

Obtain positive sample image(s) — S1202

Adjust the positive sample image(s) — S1204

Divide each positive sample image — S1206

Extract an image feature from the positive sample image(s) through a teacher network — S1208-1

Generate a respective negative sample image on a basis of each positive sample image — S1208-2

Extract an image feature from the positive sample image(s) and an image feature of the negative sample image(s) through a student network — S1208-3

Compare the image features — S1210

FIG. 12

Obtain a first image — S1302

Adjust the first image — S1304

Divide the first image — S1306

Extract an image feature from the first image through a teacher network — S1308-1

Extract an image feature from the first image though a student network — S1308-2

Compare the features — S1310

Determine a recognition result of the first image according to similarity — S1312

FIG. 13

First obtaining unit
1402

Recognizing unit
1404

Second obtaining unit
1406

Determining unit
1408

Apparatus for image
recognition

FIG. 14

1502

Memory

First obtaining unit
1402

Recognition unit
1404

Second obtaining
unit 1406

Determining unit
1408

1508

1504

1506

Transmission
apparatus

Processor

FIG. 15

## INTERNATIONAL SEARCH REPORT

| | International application No. |
|---|---|
| | **PCT/CN2024/112262** |

**A. CLASSIFICATION OF SUBJECT MATTER**

G06T7/00(2017.01)i; G06V10/44(2022.01)i; G06V10/74(2022.01)i; G06N3/045(2023.01)i; G06N3/0464(2023.01)i

According to International Patent Classification (IPC) or to both national classification and IPC

**B. FIELDS SEARCHED**

Minimum documentation searched (classification system followed by classification symbols)

IPC: G06T GO6V G06N

Documentation searched other than minimum documentation to the extent that such documents are included in the fields searched

Electronic data base consulted during the international search (name of data base and, where practicable, search terms used)

CNKI, IEEE, CNABS, VEN, CNTXT, WOTXT, USTXT, EPTXT: 产品, 零件, 元件, 对象, 缺陷, 残缺, 残次, 不合格, 异常, 特征, 相似, 距离, 正样本, 正例, 负样本, 负例, 孪生, product, object, part, NG, abnormal, anomaly, similarity, distance, sample, positive, negative, twin

**C. DOCUMENTS CONSIDERED TO BE RELEVANT**

| Category* | Citation of document, with indication, where appropriate, of the relevant passages | Relevant to claim No. |
|---|---|---|
| PX | CN 117197110 A (CHONGQING TENCENT INFORMATION TECHNOLOGY CO., LTD.) 08 December 2023 (2023-12-08) claims 1-16 | 1-16 |
| A | CN 112308148 A (AINNOVATION (QINGDAO) TECHNOLOGY CO., LTD.) 02 February 2021 (2021-02-02) description, paragraphs 53-83 | 1-16 |
| A | CN 113591566 A (BEIJING BAIDU NETCOM SCIENCE AND TECHNOLOGY CO., LTD.) 02 November 2021 (2021-11-02) entire document | 1-16 |
| A | CN 113160200 A (MATRIXTIME TECHNOLOGY (SHANGHAI) CO., LTD.) 23 July 2021 (2021-07-23) entire document | 1-16 |
| A | CN 111179251 A (SHANGHAI JIAO TONG UNIVERSITY) 19 May 2020 (2020-05-19) entire document | 1-16 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **12 October 2024** | **29 October 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/112262** |

**C.    DOCUMENTS CONSIDERED TO BE RELEVANT**

| Category* | Citation of document, with indication, where appropriate, of the relevant passages | Relevant to claim No. |
| --- | --- | --- |
| A | US 2023410285 A1 (KONICA MINOLTA INC.) 21 December 2023 (2023-12-21) entire document | 1-16 |

Form PCT/ISA/210 (second sheet) (July 2022)

| Patent document cited in search report | | | Publication date (day/month/year) | Patent family member(s) | | | Publication date (day/month/year) |
|---|---|---|---|---|---|---|---|
| CN | 117197110 | A | 08 December 2023 | None | | | |
| CN | 112308148 | A | 02 February 2021 | None | | | |
| CN | 113591566 | A | 02 November 2021 | None | | | |
| CN | 113160200 | A | 23 July 2021 | None | | | |
| CN | 111179251 | A | 19 May 2020 | None | | | |
| US | 2023410285 | A1 | 21 December 2023 | JPWO | 2022137841 | A1 | 30 June 2022 |
| | | | | WO | 2022137841 | A1 | 30 June 2022 |

Form PCT/ISA/210 (patent family annex) (July 2022)

**EP 4 745 878 A1**

**Patent documents cited in the description**

- CN 202311239167